# EUROPEAN PATENT APPLICATION

(11) **EP 4 848 059 A1**
(43) Date of publication of application: **02.12.2026**
(21) Application number: 26179469.7
(22) Date of filing: 19.05.2026
(51) Int. Cl.: G06F 3/0488, A63F 13/2145

(54) **ADJUSTING A VIRTUAL CONTROLLER BASED ON HAND MOVEMENTS**

(30) Priority: 30.05.2025 US 202563815004 P; 08.04.2026 US 202619642486
(71) Applicant: Apple Inc., Cupertino, CA 95014 (US)
(72) Inventor: HEE, Gordon L., Irvine, 92618 (US); CHALMERS, Devin W., Cupertino, 95014 (US); CLEMENT, Manuel C., Cupertino, 95014 (US); SALTER, Thomas G., Cupertino, 95014 (US); NAIR, Rahul, Cupertino, 95014 (US)
(74) Representative: COPA Copenhagen Patents

(57) **Abstract**

Some examples of the disclosure are directed to systems and methods for adjusting a virtual controller based on hand movements. In some examples, the electronic device receives a hand parameter (e.g., including hand and/or finger movements) corresponding to hand and/or finger movements directed towards a developer/computer-defined controller user interface. In response to receiving the hand parameter, the electronic device adjusts portions of the controller user interface based on the hand parameter.

## Description

### Cross-Reference to Related Applications

This application claims the benefit of U.S. Provisional Application No. 63/815,004, filed May 30, 2025, and U.S. Patent Application No. 19/642,486, filed April 8, 2026, the contents of which are herein incorporated by reference in their entireties for all purposes.

### Field of the Disclosure

This relates generally to systems and methods of adjusting a virtual controller based on hand movements and related inputs.

### Background of the Disclosure

Some computer graphical environments provide two-dimensional (2D) and/or three-dimensional (3D) environments where at least some objects displayed for a user's viewing are virtual and generated by a computer. In some examples, a user may use a second electronic device in communication with a head-mounted device to provide inputs to the head-mounted device.

### Summary of the Disclosure

Some examples of the disclosure are directed to systems and methods for adjusting a virtual controller based on hand movements. In some examples, the electronic device receives a hand parameter (e.g., including hand and/or finger movements) corresponding to hand and/or finger movements directed towards a developer/computer-defined controller user interface. In response to receiving the hand parameter, the electronic device adjusts portions of the controller user interface based on the hand parameter.

The full descriptions of these examples are provided in the Drawings and the Detailed Description, and it is understood that this Summary does not limit the scope of the disclosure in any way.

### Brief Description of the Drawings

For improved understanding of the various examples described herein, reference should be made to the Detailed Description below along with the following drawings. Like reference numerals often refer to corresponding parts throughout the drawings.
FIG. 1 illustrates an electronic device presenting a three-dimensional environment according to some examples of the disclosure.
FIGs. 2A-2B illustrate block diagrams of example architectures for electronic devices according to some examples of the disclosure.
FIGs. 3A-3T illustrate an example where an electronic device receives a hand parameter and generates a user-generated controller user interface according to some examples of the disclosure.
FIG. 4 illustrates a flow diagram illustrating an example process for receiving a hand parameter and generating a user-generated controller user interface according to some examples of the disclosure.

### Detailed Description

Some examples of the disclosure are directed to systems and methods for adjusting a virtual controller based on hand movements. In some examples, the electronic device receives a hand parameter (e.g., including hand and/or finger movements) corresponding to hand and/or finger movements directed towards a developer/computer-defined controller user interface. In response to receiving the hand parameter, the electronic device adjusts portions of the controller user interface based on the hand parameter.

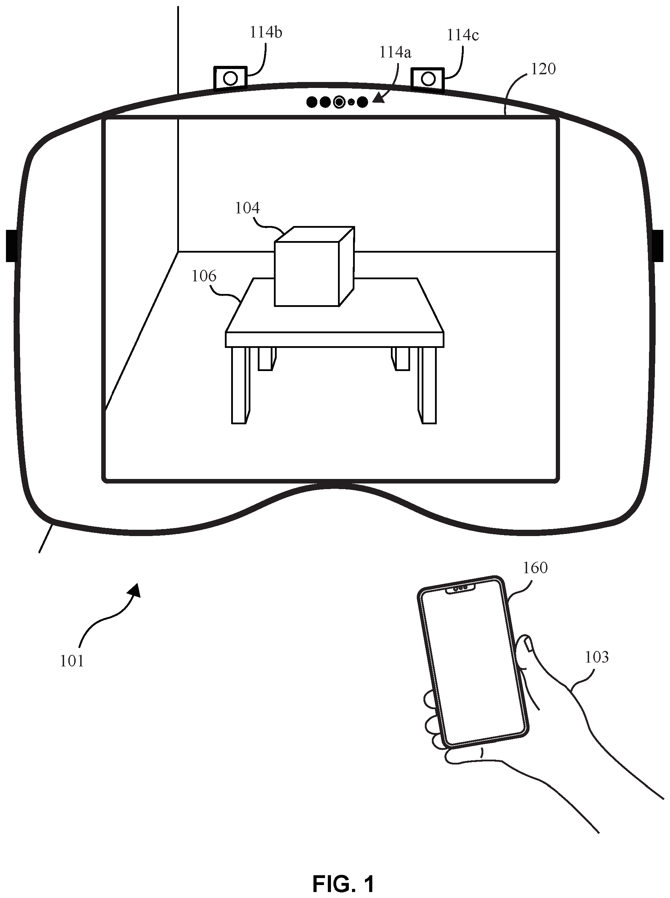

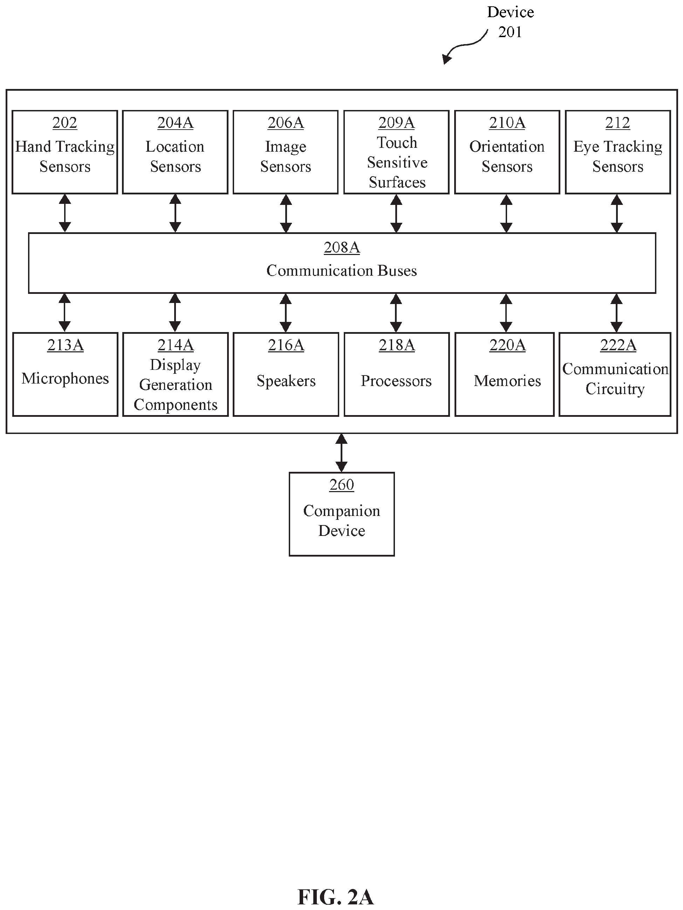

FIG. 1 illustrates an electronic device 101 presenting three-dimensional environment (e.g., an extended reality (XR) environment or a computer-generated reality (CGR) environment, optionally including representations of physical and/or virtual objects), according to some examples of the disclosure. In some examples, as shown in FIG. 1, electronic device 101 is a head-mounted display or other head-mountable device configured to be worn on a head of a user of the electronic device 101. Examples of electronic device 101 are described below with reference to the architecture block diagram of FIG. 2A. As shown in FIG. 1, electronic device 101 and table 106 are located in a physical environment. The physical environment may include physical features such as a physical surface (e.g., floor, walls) or a physical object (e.g., table, lamp, etc.). In some examples, electronic device 101 may be configured to detect and/or capture images of the physical environment including table 106 (illustrated in the field of view of electronic device 101).

In some examples, as shown in FIG. 1, electronic device 101 includes one or more internal image sensors 114a oriented towards a face of the user (e.g., eye tracking cameras as described below with reference to FIGs. 2A-2B). In some examples, internal image sensors 114a are used for eye tracking (e.g., detecting a gaze of the user). Internal image sensors 114a are optionally arranged on the left and right portions of display 120 to enable eye tracking of the user's left and right eyes. In some examples, electronic device 101 also includes external image sensors 114b and 114c facing outwards from the user to detect and/or capture the physical environment of the electronic device 101 and/or movements of the user's hands or other body parts.

In some examples, display 120 has a field of view visible to the user. In some examples, the field of view visible to the user is the same as a field of view of external image sensors 114b and 114c. For example, when display 120 is optionally part of a head-mounted device, the field of view of display 120 is optionally the same as or similar to the field of view of the user's eyes. In some examples, the field of view visible to the user is different from a field of view of external image sensors 114b and 114c (e.g., narrower than the field of view of external image sensors 114b and 114c). In other examples, the field of view of display 120 may be smaller than the field of view of the user's eyes. A viewpoint of a user determines what content is visible in the field of view, a viewpoint generally specifies a location and a direction relative to the three-dimensional environment. As the viewpoint of a user shifts, the field of view of the three-dimensional environment will also shift accordingly. In some examples, electronic device 101 may be an optical see-through device in which display 120 is a transparent or translucent display through which portions of the physical environment may be directly viewed. In some examples, display 120 may be included within a transparent lens and may overlap all or a portion of the transparent lens. In other examples, electronic device may be a video-passthrough device in which display 120 is an opaque display configured to display images of the physical environment using images captured by external image sensors 114b and 114c. While a single display is shown in FIG. 1, it is understood that display 120 optionally includes more than one display. For example, display 120 optionally includes a stereo pair of displays (e.g., left and right display panels for the left and right eyes of the user, respectively) having displayed outputs that are merged (e.g., by the user's brain) to create the view of the content shown in FIG. 1. In some examples, as discussed in more detail below with reference to FIGs. 2A-2B, the display 120 includes or corresponds to a transparent or translucent surface (e.g., a lens) that is not equipped with display capability (e.g., and is therefore unable to generate and display the virtual object 104) and alternatively presents a direct view of the physical environment in the user's field of view (e.g., the field of view of the user's eyes).

In some examples, the electronic device 101 is configured to display (e.g., in response to a trigger) a virtual object 104 in the three-dimensional environment. Virtual object 104 is represented by a cube illustrated in FIG. 1, which is not present in the physical environment, but is displayed in the three-dimensional environment positioned on the top of table 106 (e.g., real-world table or a representation thereof). Optionally, virtual object 104 is displayed on the surface of the table 106 in the three-dimensional environment displayed via the display 120 of the electronic device 101 in response to detecting the planar surface of table 106 in the physical environment 100.

It is understood that virtual object 104 is a representative virtual object and one or more different virtual objects (e.g., of various dimensionality such as two-dimensional or other three-dimensional virtual objects) can be included and rendered in a three-dimensional environment. For example, the virtual object can represent an application or a user interface displayed in the three-dimensional environment. In some examples, the virtual object can represent content corresponding to the application and/or displayed via the user interface in the three-dimensional environment. In some examples, the virtual object 104 is optionally configured to be interactive and responsive to user input (e.g., air gestures, such as air pinch gestures, air tap gestures, and/or air touch gestures), such that a user may virtually touch, tap, move, rotate, or otherwise interact with, the virtual object 104.

As discussed herein, one or more air pinch gestures performed by a user (e.g., with hand 103 in FIG. 1) are detected by one or more input devices of electronic device 101 and interpreted as one or more user inputs directed to content displayed by electronic device 101. Additionally or alternatively, in some examples, the one or more user inputs interpreted by the electronic device 101 as being directed to content displayed by electronic device 101 (e.g., the virtual object 104) are detected via one or more hardware input devices (e.g., controllers, touch pads, proximity sensors, buttons, sliders, knobs, etc.) rather than via the one or more input devices that are configured to detect air gestures, such as the one or more air pinch gestures, performed by the user. Such depiction is intended to be exemplary rather than limiting; the user optionally provides user inputs using different air gestures and/or using other forms of input.

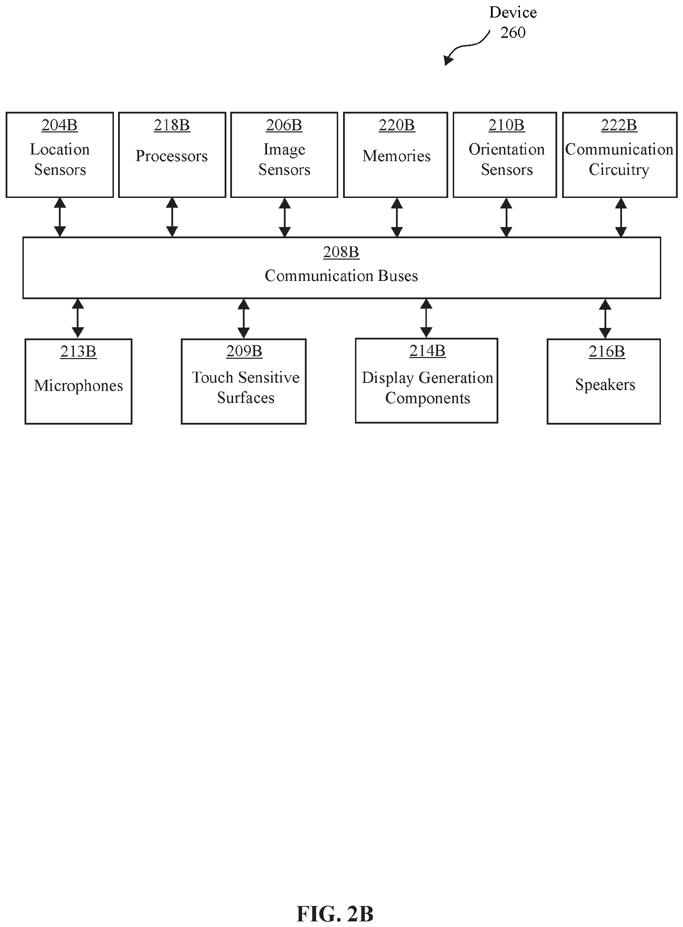

In some examples, the electronic device 101 may be configured to communicate with a second electronic device, such as a companion device. For example, as illustrated in FIG. 1, the electronic device 101 is optionally in communication with electronic device 160. In some examples, electronic device 160 corresponds to a mobile electronic device, such as a smartphone, a tablet computer, a smart watch, a laptop computer, or other electronic device. In some examples, electronic device 160 corresponds to a non-mobile electronic device, which is generally stationary and not easily moved within the physical environment (e.g., desktop computer, server, etc.). Additional examples of electronic device 160 are described below with reference to the architecture block diagram of FIG. 2B. In some examples, the electronic device 101 and the electronic device 160 are associated with a same user. For example, in FIG. 1, the electronic device 101 may be positioned on (e.g., mounted to) a head of a user and the electronic device 160 may be positioned near electronic device 101, such as in a hand 103 of the user (e.g., the hand 103 is holding the electronic device 160), a pocket or bag of the user, or a surface near the user. The electronic device 101 and the electronic device 160 are optionally associated with a same user account of the user (e.g., the user is logged into the user account on the electronic device 101 and the electronic device 160). Additional details regarding the communication between the electronic device 101 and the electronic device 160 are provided below with reference to FIGs. 2A-2B.

In some examples, displaying an object in a three-dimensional environment is caused by or enables interaction with one or more user interface objects in the three-dimensional environment. For example, initiation of display of the object in the three-dimensional environment can include interaction with one or more virtual options/affordances displayed in the three-dimensional environment. In some examples, a user's gaze may be tracked by the electronic device as an input for identifying one or more virtual options/affordances targeted for selection when initiating display of an object in the three-dimensional environment. For example, gaze can be used to identify one or more virtual options/affordances targeted for selection using another selection input. In some examples, a virtual option/affordance may be selected using hand-tracking input detected via an input device in communication with the electronic device. In some examples, objects displayed in the three-dimensional environment may be moved and/or reoriented in the three-dimensional environment in accordance with movement input detected via the input device.

In the descriptions that follows, an electronic device that is in communication with one or more displays and one or more input devices is described. It is understood that the electronic device optionally is in communication with one or more other physical user-interface devices, such as a touch-sensitive surface, a physical keyboard, a mouse, a joystick, a hand tracking device, an eye tracking device, a stylus, etc. Further, as described above, it is understood that the described electronic device, display and touch-sensitive surface are optionally distributed between two or more devices. Therefore, as used in this disclosure, information displayed on the electronic device or by the electronic device is optionally used to describe information outputted by the electronic device for display on a separate display device (touch-sensitive or not). Similarly, as used in this disclosure, input received on the electronic device (e.g., touch input received on a touch-sensitive surface of the electronic device, or touch input received on the surface of a stylus) is optionally used to describe input received on a separate input device, from which the electronic device receives input information.

The device typically supports a variety of applications, such as one or more of the following: a drawing application, a presentation application, a word processing application, a website creation application, a disk authoring application, a spreadsheet application, a gaming application, a telephone application, a video conferencing application, an e-mail application, an instant messaging application, a workout support application, a photo management application, a digital camera application, a digital video camera application, a web browsing application, a digital music player application, a television channel browsing application, and/or a digital video player application.

FIGs. 2A-2B illustrate block diagrams of example architectures for electronic devices according to some examples of the disclosure. In some examples, electronic device 201 and/or electronic device 260 include one or more electronic devices. For example, the electronic device 201 may be a portable device, an auxiliary device in communication with another device, a head-mounted display, a head-worn speaker, etc., respectively. In some examples, electronic device 201 corresponds to electronic device 101 described above with reference to FIG. 1. In some examples, electronic device 260 corresponds to electronic device 160 described above with reference to FIG. 1.

As illustrated in FIG. 2A, the electronic device 201 optionally includes one or more sensors, such as one or more hand tracking sensors 202, one or more location sensors 204A, one or more image sensors 206A (optionally corresponding to internal image sensors 114a and/or external image sensors 114b and 114c in FIG. 1), one or more touch-sensitive surfaces 209A, one or more motion and/or orientation sensors 210A, one or more eye tracking sensors 212, one or more microphones 213A or other audio sensors, one or more body tracking sensors (e.g., torso and/or head tracking sensors), etc. The electronic device 201 optionally includes one or more output devices, such as one or more display generation components 214A, optionally corresponding to display 120 in FIG. 1, one or more speakers 216A, one or more haptic output devices (not shown), etc. The electronic device 201 optionally includes one or more processors 218A, one or more memories 220A, and/or communication circuitry 222A. One or more communication buses 208A are optionally used for communication between the above-mentioned components of electronic device 201.

Additionally, the electronic device 260 optionally includes the same or similar components as the electronic device 201. For example, as shown in FIG. 2B, the electronic device 260 optionally includes one or more location sensors 204B, one or more image sensors 206B, one or more touch-sensitive surfaces 209B, one or more orientation sensors 210B, one or more microphones 213B, one or more display generation components 214B, one or more speakers 216B, one or more processors 218B, one or more memories 220B, and/or communication circuitry 222B. One or more communication buses 208B are optionally used for communication between the above-mentioned components of electronic device 260.

The electronic devices 201 and 260 are optionally configured to communicate via a wired or wireless connection (e.g., via communication circuitry 222A, 222B) between the two electronic devices. For example, as indicated in FIG. 2A, the electronic device 260 may function as a companion device to the electronic device 201. For example, in some examples, the electronic device 260 processes sensor inputs from electronic devices 201 and 260 and/or generates content for display using display generation components 214A of electronic device 201.

Communication circuitry 222A, 222B optionally includes circuitry for communicating with electronic devices, networks, such as the Internet, intranets, a wired network and/or a wireless network, cellular networks, and wireless local area networks (LANs). Communication circuitry 222A, 222B optionally includes circuitry for communicating using near-field communication (NFC) and/or short-range communication, such as Bluetooth^{®}, etc. In some examples, communication circuitry 222A, 222B includes or supports Wi-Fi (e.g., an 802.11 protocol), Ethernet, ultra-wideband ("UWB"), high frequency systems (e.g., 900 MHz, 2.4 GHz, and 5.6 GHz communication systems), or any other communications protocol, or any combination thereof.

One or more processors 218A, 218B include one or more general processors, one or more graphics processors, and/or one or more digital signal processors. In some examples, one or more processors 218A, 218B include one or more microprocessors, one or more central processing units, one or more application-specific integrated circuits, one or more field-programmable gate arrays, one or more programmable logic devices, or a combination of such devices. In some examples, memories 220A and/or 220B are a non-transitory computer-readable storage medium (e.g., flash memory, random access memory, or other volatile or non-volatile memory or storage) that stores computer-readable instructions configured to be executed by the one or more processors 218A, 218B to perform the techniques, processes, and/or methods described herein. In some examples, memories 220A and/or 220B can include more than one non-transitory computer-readable storage medium. A non-transitory computer-readable storage medium can be any medium (e.g., excluding a signal) that can tangibly contain or store computer-executable instructions for use by or in connection with the instruction execution system, apparatus, or device. In some examples, the storage medium is a transitory computer-readable storage medium. In some examples, the storage medium is a non-transitory computer-readable storage medium. The non-transitory computer-readable storage medium can include, but is not limited to, magnetic, optical, and/or semiconductor storages. Examples of such storage include magnetic disks, optical discs based on compact disc (CD), digital versatile disc (DVD), or Blu-ray technologies, as well as persistent solid-state memory such as flash, solid-state drives, and the like.

In some examples, one or more display generation components 214A, 214B include a single display (e.g., a liquid-crystal display (LCD), organic light-emitting diode (OLED), or other types of display). In some examples, the one or more display generation components 214A, 214B include multiple displays. In some examples, the one or more display generation components 214A, 214B can include a display with touch capability (e.g., a touch screen), a projector, a holographic projector, a retinal projector, a transparent or translucent display, etc. In some examples, the electronic device does not include one or more display generation components 214A or 214B. For example, instead of the one or more display generation components 214A or 214B, some electronic devices include transparent or translucent lenses or other surfaces that are not configured to display or present virtual content. However, it should be understood that, in such instances, the electronic device 201 and/or the electronic device 260 are optionally equipped with one or more of the other components illustrated in FIGs. 2A and 2B and described herein, such as the one or more hand tracking sensors 202, one or more eye tracking sensors 212, one or more image sensors 206A, and/or the one or more motion and/or orientations sensors 210A. Alternatively, in some examples, the one or more display generation components 214A or 214B are provided separately from the electronic devices 201 and/or 260. For example, the one or more display generation components 214A, 214B are in communication with the electronic device 201 (and/or electronic device 260), but are not integrated with the electronic device 201 and/or electronic device 260 (e.g., within a housing of the electronic devices 201, 260). In some examples, electronic devices 201 and 260 include one or more touch-sensitive surfaces 209A and 209B, respectively, for receiving user inputs, such as tap inputs and swipe inputs or other gestures (e.g., hand-based or finger-based gestures). In some examples, the one or more display generation components 214A, 214B and the one or more touch-sensitive surfaces 209A, 209B form one or more touch-sensitive displays (e.g., a touch screen integrated with each of electronic devices 201 and 260 or external to each of electronic devices 201 and 260 that is in communication with each of electronic devices 201 and 260).

Electronic devices 201 and 260 optionally include one or more image sensors 206A and 206B, respectively. The one or more image sensors 206A, 206B optionally include one or more visible light image sensors, such as charged coupled device (CCD) sensors, and/or complementary metal-oxide-semiconductor (CMOS) sensors operable to obtain images of physical objects from the real-world environment. The one or more image sensors 206A, 206B also optionally include one or more infrared (IR) sensors, such as a passive or an active IR sensor, for detecting infrared light from the real-world environment. For example, an active IR sensor includes an IR emitter for emitting infrared light into the real-world environment. The one or more image sensors 206A, 206B also optionally include one or more cameras configured to capture movement of physical objects in the real-world environment. The one or more image sensors 206A, 206B also optionally include one or more depth sensors configured to detect the distance of physical objects from electronic device 201, 260. In some examples, information from one or more depth sensors can allow the device to identify and differentiate objects in the real-world environment from other objects in the real-world environment. In some examples, one or more depth sensors can allow the device to determine the texture and/or topography of objects in the real-world environment. In some examples, the one or more image sensors 206A or 206B are included in an electronic device different from the electronic devices 201 and/or 260. For example, the one or more image sensors 206A, 206B are in communication with the electronic device 201, 260, but are not integrated with the electronic device 201, 260 (e.g., within a housing of the electronic device 201, 260). Particularly, in some examples, the one or more cameras of the one or more image sensors 206A, 206B are integrated with and/or coupled to one or more separate devices from the electronic devices 201 and/or 260 (e.g., but are in communication with the electronic devices 201 and/or 260), such as one or more input and/or output devices (e.g., one or more speakers and/or one or more microphones, such as earphones or headphones) that include the one or more image sensors 206A, 206B. In some examples, electronic device 201 or electronic device 260 corresponds to a head-worn speaker (e.g., headphones or earbuds). In such instances, the electronic device 201 or the electronic device 260 is equipped with a subset of the other components illustrated in FIGs. 2A and 2B and described herein. In some such examples, the electronic device 201 or the electronic device 260 is equipped with one or more image sensors 206A, 206B, the one or more motion and/or orientations sensors 210A, 210B, and/or speakers 216A, 216B.

In some examples, electronic device 201, 260 uses CCD sensors, event cameras, and depth sensors in combination to detect the physical environment around electronic device 201, 260. In some examples, the one or more image sensors 206A, 206B include a first image sensor and a second image sensor. The first image sensor and the second image sensor work in tandem and are optionally configured to capture different information of physical objects in the real-world environment. In some examples, the first image sensor is a visible light image sensor, and the second image sensor is a depth sensor. In some examples, electronic device 201, 260 uses the one or more image sensors 206A, 206B to detect the position and orientation of electronic device 201, 260 and/or the one or more display generation components 214A, 214B in the real-world environment. For example, electronic device 201, 260 uses the one or more image sensors 206A, 206B to track the position and orientation of the one or more display generation components 214A, 214B relative to one or more fixed objects in the real-world environment.

In some examples, electronic devices 201 and 260 include one or more microphones 213A and 213B, respectively, or other audio sensors. Electronic device 201, 260 optionally uses the one or more microphones 213A, 213B to detect sound from the user and/or the real-world environment of the user. In some examples, the one or more microphones 213A, 213B include an array of microphones (e.g., a plurality of microphones) that optionally operate in tandem, such as to identify ambient noise or to locate the source of sound in space of the real-world environment.

Electronic devices 201 and 260 include one or more location sensors 204A and 204B, respectively, for detecting a location of electronic device 201 and/or the one or more display generation components 214A and a location of electronic device 260 and/or the one or more display generation components 214B, respectively. For example, the one or more location sensors 204A, 204B can include a global positioning system (GPS) receiver that receives data from one or more satellites and allows electronic device 201, 260 to determine the absolute position of the electronic device in the physical world.

Electronic devices 201 and 260 include one or more orientation sensors 210A and 210B, respectively, for detecting orientation and/or movement of electronic device 201 and/or the one or more display generation components 214A and orientation and/or movement of electronic device 260 and/or the one or more display generation components 214B, respectively. For example, electronic device 201, 260 uses the one or more orientation sensors 210A, 210B to track changes in the position and/or orientation of electronic device 201, 260 and/or the one or more display generation components 214A, 214B, such as with respect to physical objects in the real-world environment. The one or more orientation sensors 210A, 210B optionally include one or more gyroscopes and/or one or more accelerometers.

Electronic device 201 includes one or more hand tracking sensors 202 and/or one or more eye tracking sensors 212, in some examples. It is understood, that although referred to as hand tracking or eye tracking sensors, that electronic device 201 additionally or alternatively optionally includes one or more other body tracking sensors, such as one or more leg, one or more torso and/or one or more head tracking sensors. The one or more hand tracking sensors 202 are configured to track the position and/or location of one or more portions of the user's hands, and/or motions of one or more portions of the user's hands with respect to the three-dimensional environment, relative to the one or more display generation components 214A, and/or relative to another defined coordinate system. The one or more eye tracking sensors 212 are configured to track the position and movement of a user's gaze (e.g., a user's attention, including eyes, face, or head, more generally) with respect to the real-world or three-dimensional environment and/or relative to the one or more display generation components 214A. In some examples, the one or more hand tracking sensors 202 and/or the one or more eye tracking sensors 212 are implemented together with the one or more display generation components 214A. In some examples, the one or more hand tracking sensors 202 and/or the one or more eye tracking sensors 212 are implemented separate from the one or more display generation components 214A. In some examples, electronic device 201 alternatively does not include the one or more hand tracking sensors 202 and/or the one or more eye tracking sensors 212. In some such examples, the one or more display generation components 214A may be utilized by the electronic device 260 to provide a three-dimensional environment and the electronic device 260 may utilize input and other data gathered via the other one or more sensors (e.g., the one or more location sensors 204A, the one or more image sensors 206A, the one or more touch-sensitive surfaces 209A, the one or more motion and/or orientation sensors 210A, and/or the one or more microphones 213A or other audio sensors) of the electronic device 201 as input and data that is processed by the one or more processors 218B of the electronic device 260. Additionally or alternatively, electronic device 260 optionally does not include other components shown in FIG. 2B, such as the one or more location sensors 204B, the one or more image sensors 206B, the one or more touch-sensitive surfaces 209B, etc. In some such examples, the one or more display generation components 214A may be utilized by the electronic device 260 to provide a three-dimensional environment and the electronic device 260 may utilize input and other data gathered via the one or more motion and/or orientation sensors 210A (and/or the one or more microphones 213A) of the electronic device 201 as input.

In some examples, the one or more hand tracking sensors 202 (and/or other body tracking sensors, such as leg, torso and/or head tracking sensors) can use the one or more image sensors 206 (e.g., one or more IR cameras, 3D cameras, depth cameras, etc.) that capture three-dimensional information from the real-world including one or more body parts (e.g., hands, legs, or torso of a human user). In some examples, the hands can be resolved with sufficient resolution to distinguish fingers and their respective positions. In some examples, the one or more image sensors 206A are positioned relative to the user to define a field of view of the one or more image sensors 206A and an interaction space in which finger/hand position, orientation and/or movement captured by the image sensors are used as inputs (e.g., to distinguish from a user's resting hand or other hands of other persons in the real-world environment). Tracking the fingers/hands for input (e.g., gestures, touch, tap, etc.) can be advantageous in that it does not require the user to touch, hold or wear any sort of beacon, sensor, or other marker.

In some examples, the one or more eye tracking sensors 212 include at least one eye tracking camera (e.g., IR cameras) and/or illumination sources (e.g., IR light sources, such as LEDs) that emit light towards a user's eyes. The eye tracking cameras may be pointed towards a user's eyes to receive reflected IR light from the light sources directly or indirectly from the eyes. In some examples, both eyes are tracked separately by respective eye tracking cameras and illumination sources, and a focus/gaze can be determined from tracking both eyes. In some examples, one eye (e.g., a dominant eye) is tracked by one or more respective eye tracking cameras/illumination sources.

Electronic devices 201 and 260 are not limited to the components and configuration of FIGs. 2A-2B, but can include fewer, other, or additional components in multiple configurations. In some examples, electronic device 201 and/or electronic device 260 can each be implemented between multiple electronic devices (e.g., as a system). In some such examples, each of (or more of) the electronic devices may include one or more of the same components discussed above, such as various sensors, one or more display generation components, one or more speakers, one or more processors, one or more memories, and/or communication circuitry. A person or persons using electronic device 201 and/or electronic device 260, is optionally referred to herein as a user or users of the device.

Attention is now directed towards interactions with one or more virtual objects that are displayed in a three-dimensional environment presented at a first electronic device (e.g., corresponding to electronic device 201). In some examples, the first electronic device is in communication with a second electronic device (e.g., electronic device 260) including a touch surface for receiving touch inputs (e.g., with a finger or stylus). In some examples, the second electronic device receives one or more touch inputs for controlling one or more virtual object and/or actions on the first electronic device. For example, the second electronic device may act as a video game controller to control a video game user interface presented on the display(s) of the first electronic device. In some examples, performing a calibration of the buttons on a virtual video game controller displayed on the second electronic device enhances user-device interaction by customizing the size and position of the buttons based on user input.

In some examples, the first electronic device (e.g., electronic device 201 above) is in communication with a companion device (e.g., electronic device 260 and the second electronic device described above), as described in FIGs. 2A-2B. In some examples, the first electronic device is and/or includes one or more displays that rely on the second electronic device (e.g., the companion device) to display content. In some examples, the first electronic device relies on the second electronic device to receive/detect inputs. In some examples, the second electronic device is a wearable device with one or more output devices (e.g., a display and/or speakers) and one or more input devices (e.g., one or more sensors described above). In some examples, the second electronic device is a smart phone, laptop, or tablet.

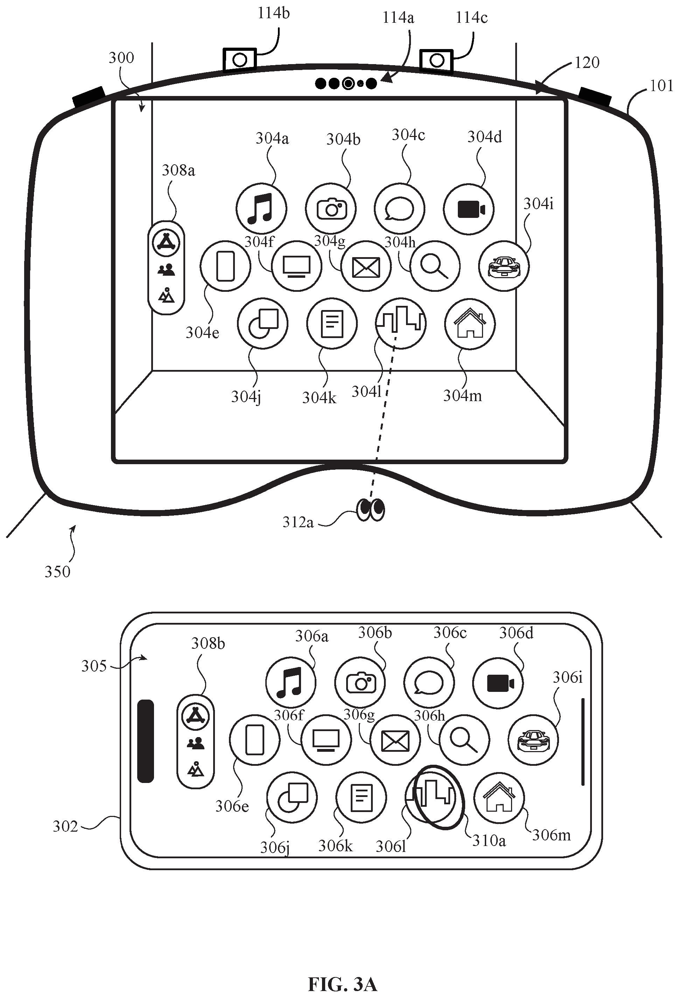

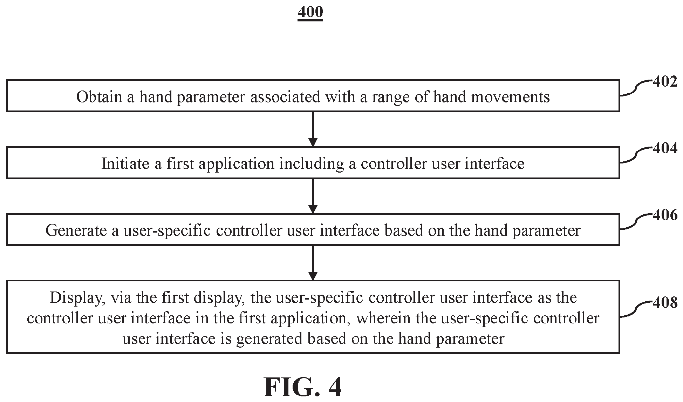

FIGs. 3A-3T illustrate an example where an electronic device receives a hand parameter and generates a user-generated controller user interface according to some examples of the disclosure. FIGs. 3A-3T are used to illustrate the processes described below, including process 400, shown in FIG. 4.

FIG. 3A illustrates an electronic device 101 (e.g., corresponding to electronic device 201) presenting, via display 120, a three-dimensional environment 300 including a portion of a physical environment 350 from a point of view of a user of the electronic device 101 and/or electronic device 302. In FIG. 3A, the electronic device 101 optionally presents three-dimensional environment 300 via a video pass-through or optical see-through display. FIG. 3A also includes a depiction of electronic device 302 (e.g., corresponding to companion device 260 and/or the second electronic device described above), which is in communication with electronic device 101, such as described below. In some examples, a user may be holding electronic device 302 while wearing electronic device 101 as a head-mounted display. The electronic device 302 causes the electronic device 101 to display the three-dimensional environment 300. For example, the electronic device 101 does not include a processor and/or other hardware for processing or generating content and the electronic device 101 is merely a display (e.g., corresponding to display 120). Additionally, in some examples, the electronic device 302 causes the electronic device 101 to display content on display 120. Alternatively, the electronic device 101 optionally includes a processor and/or other hardware for processing or generating content and the electronic device 302 may be used as an additional input device for receiving/detecting inputs.

In some examples, a viewpoint of a user influences what content (e.g., physical and/or virtual objects) is visible in a viewport (e.g., a view of the physical environment 350 visible to the user via one or more displays 120, a display, or a pair of display modules that provide stereoscopic content to different eyes of the same user). In some examples, the (virtual) viewport has a viewport boundary that defines an extent of the physical environment 350 that is visible to the user via the display 120 in FIGs. 3A-3T. In some examples, the region defined by the viewport boundary is smaller than a range of vision of the user in one or more dimensions (e.g., based on the range of vision of the user, size, optical properties or other physical characteristics of the one or more displays, and/or the location and/or orientation of the one or more displays relative to the eyes of the user). In some examples, the region defined by the viewport boundary is larger than a range of vision of the user in one or more dimensions (e.g., based on the range of vision of the user, size, optical properties or other physical characteristics of the one or more displays, and/or the location and/or orientation of the one or more displays relative to the eyes of the user). The viewport and viewport boundary typically move as the one or more displays move (e.g., moving with a head of the user for a head mounted device or moving with a hand of a user for a handheld device such as a tablet or smartphone). A viewpoint of a user influences what content is visible in the viewport, a viewpoint generally specifies a location and a direction relative to the physical environment 350, and as the viewpoint shifts, the view of the physical environment 350 will also shift in the viewport. For a head mounted device, a viewpoint is typically based on a location and a direction of the head, face, and/or eyes of a user to provide a view of the three-dimensional environment that is perceptually accurate and provides an immersive experience when the user is using the head-mounted device. For a handheld or stationed device, the viewpoint shifts as the handheld or stationed device is moved and/or as a position of a user relative to the handheld or stationed device changes (e.g., a user moving toward, away from, up, down, to the right, and/or to the left of the device). For devices that include displays with video passthrough, portions of the physical environment that are visible (e.g., displayed, and/or projected) via the one or more displays are based on a field of view of one or more cameras in communication with the displays which typically move with the displays (e.g., moving with a head of the user for a head-mounted device or moving with a hand of a user for a handheld device such as a tablet or smartphone) because the viewpoint of the user moves as the field of view of the one or more cameras moves (and the appearance of one or more virtual objects displayed via the one or more displays is updated based on the viewpoint of the user (e.g., displayed positions and poses of the virtual objects are updated based on the movement of the viewpoint of the user)). For displays with optical see-through, portions of the physical environment that are visible (e.g., optically visible through one or more partially or fully transparent portions of the display generation component) via the one or more displays are based on a field of view of a user through the partially or fully transparent portions of the display generation component (e.g., moving with a head of the user for a head mounted device or moving with a hand of a user for a handheld device such as a tablet or smartphone) because the viewpoint of the user moves as the field of view of the user through the partially or fully transparent portions of the displays moves (and the appearance of one or more virtual objects is updated based on the viewpoint of the user).

In FIG. 3A, the electronic device 302 is in communication with electronic device 101. For example, electronic devices 101 and 302 are in wireless (e.g., Bluetooth, Wi-Fi, and/or wireless network) communication or in a wired (e.g., via wires and/or cables, such as universal serial bus type A (USB-A), universal serial bus type C (USB-C), and/or ethernet) communication. In some examples, electronic devices 101 and 302 share a common user account and/or a user (e.g., a common user/account uses the devices). For example, a user is optionally logged into one or more electronic devices using one user account (e.g., one username and password).

In some examples, the one or more electronic devices 101 and/or 302 respectively include one or more sensors and/or one or more displays. For example, the electronic device(s) may include accelerometers, global positioning sensors (GPS), image sensors (image sensors 206A and/or 206B), orientation sensors (e.g., orientation sensors 210A and/or 210B), and/or location sensors (e.g., location sensors 204A and/or 204B). In some examples, the electronic device 101 relies on inputs received on electronic device 302. For example, the electronic device 302 acts as a video game controller to control a video game application (e.g., a video game user interface) displayed on electronic device 101. In some examples, the electronic device 302 may operate as other external input devices (e.g., such as a touch pad) for receiving touches and/or other inputs to operate the electronic device 101. In some examples, the electronic device 302 may operate as a separate electronic device in communication with electronic device 101.

FIG. 3A illustrates an example where a user is looking at, via the display 120, a virtual user interface including options 304a through 304m and menu 308a while wearing electronic device 101 (or while using electronic device 101). As described here, the electronic device 101 may display user interface, virtual objects, and/or representations of the physical environment 350 (e.g., using one or more processors of electronic device 101) or the electronic device 302 may cause the electronic device 101 to display the user interfaces, virtual objects, and/or representations of the physical environment 350 (e.g., the electronic device 101 acts as an external display to electronic device 302), such as described above. In FIG. 3A, the electronic device 101 displays a home screen user interface including the options 304a through 304m, which represent an application stored on the electronic device 101 or on a storage device in communication with electronic device 101 (e.g., stored on electronic device 302 or on a cloud storage in communication with electronic device 101 and/or electronic device 302). In some examples, the options 304a through 304m, when selected, cause the electronic device 101 to open a corresponding user interface associated with a respective application. The electronic device 101 also displays menu 308a including a plurality of options to view applications (e.g., as shown in FIG. 3A), view people, and view environments.

As described above, the electronic device 302 may act as an external input device to electronic device 101. Alternatively, the electronic device 101 is optionally an external display to electronic device 302 and the electronic device 302 receives and/or processes inputs for displaying content on electronic device 101. In FIG. 3A, the electronic device 302 displays, on display 305, options 306a through 306m, corresponding to options 304a through 304m. The electronic device 302 also displays menu 308b corresponding to menu 308a. In FIG. 3A, the electronic device 101 receives an input including contact 310a (e.g., a touch input using a finger directed towards option 3061 on display 305) directed towards option 3061 (corresponding to option 3041 shown on the display 120 of electronic device 101). Alternatively or additionally, in some examples, the electronic device 101 includes eye tracking and hand tracking sensors and the electronic device 101 receives an input directed towards option 3041 using eyes 312a (e.g., a gaze and (optionally) air-pinch with a user's eyes and hands directed towards option 3041). In some examples, the touch inputs described herein can be replaced with a gaze and/or air-pinch input directed towards the electronic device 101.

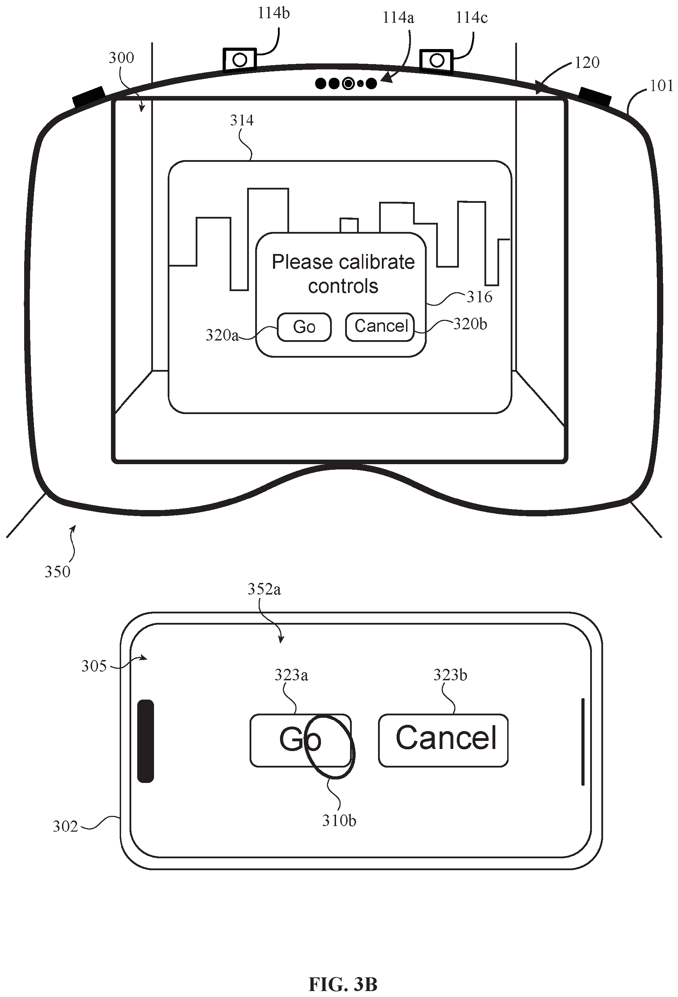

In response to detecting the input illustrated in FIG. 3A, the electronic device 101 (or the electronic device 302 causes the electronic device 101) to display a user interface 314 of the application associated with option 3041/option 306m, as shown in FIG. 3B. In some examples, the application is a first video game application. In some examples, interaction with and/or operation of the first video game application requires calibration of one or more video game controls associated with the first video game application. Particularly, in some examples, playing a video game associated with the first video game application includes interacting with one or more virtual buttons via the electronic device 302 (e.g., displayed on the display of the electronic device 302). In such an instance, a virtual game controller may be personalized and/or adapted to the user of the electronic device 101 and/or the electronic device 302 (e.g., a size and/or position of the user's fingers and/or hands, an orientation of the user's fingers and/or hands, and/or elevation of the user's fingers and/or hands relative to the electronic device 302 or other reference (e.g., gravity)) based on hand enrollment data generated from the user's hand and/or finger movements and related inputs, as described herein below. In FIG. 3B, because the user has not completed a hand enrollment while in the first video game application (e.g., the hand enrollment is not complete), the electronic device 101 displays user interface 314 including a user interface element 316 with options 323a and 323b to calibrate the video game controls. In some examples, the hand enrollment is a calibration of the location and/or size of the one or more buttons displayed on electronic device 302, which correspond to buttons of a virtual game controller (e.g., shown in a controller user interface, described below). In some examples, the hand enrollment is described in greater detail below.

In examples herein, the electronic device 101 is described as performing an action. However, in the examples herein, the electronic device 302 causes the electronic device 101 to perform the respective action.

In some examples, while the electronic device 302 is connected to the electronic device 101 and/or is being used as an external input device to receive touch inputs, the electronic device 302 displays a controller user interface which includes buttons to control one or more inputs of the first video game application. In some examples, a developer of the first video game application determines and/or influences a desired size, location, and number of the buttons (e.g., a spatial distribution of the buttons) found on the controller user interface. As such, the developer of the first video game also determines and/or influences the spatial distribution of the buttons while the electronic device 101 and/or electronic device 302 is performing a calibration of the buttons.

In FIG. 3B, the electronic device 101 displays user interface element 316 corresponding to user interface 352a, displayed on electronic device 302. User interface element 316 includes options 323a and 323b which correspond to options 325a and 325b, shown on user interface 352a. In some examples, option 325a (and option 323a), when selected, causes the electronic device 101 and/or the electronic device 302 to display a hand parameter user interface to obtain one or more hand parameters associated with a range of hand movements (e.g., taps, rotational and/or translational movements of fingers, etc.). In some examples, option 325b (and option 323b), when selected, causes the electronic device 101 and/or electronic device 302 to display a different user interface of the first video game application. In some examples, the user may choose to forgo hand parameter calibration and the electronic device 302 may display a controller user interface including buttons using a developer specific spatial distribution of buttons to control the video game of the first video game application (e.g., rather than a controller user interface that is personalized and/or adapted to the aforementioned characteristics of the user's hand(s)).

In FIG. 3B, the electronic device 302 detects an input including contact 310b directed towards option 325a to open the hand parameter user interface(s). In response to detecting the input in FIG. 3B, the electronic device 101 and/or electronic device 302 display corresponding hand parameter user interface(s).

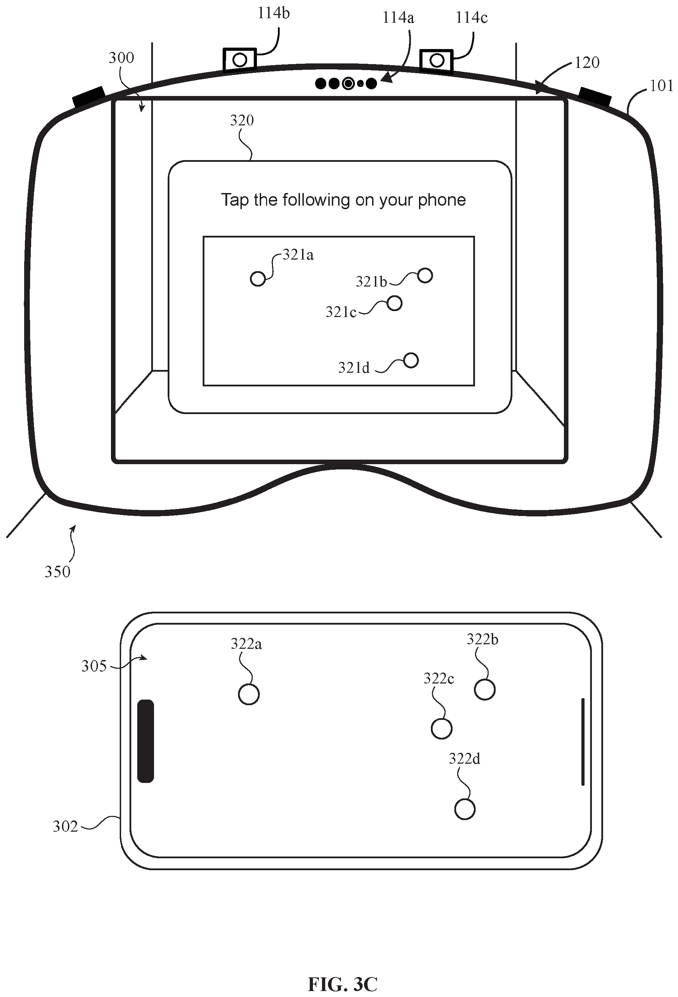

FIG. 3C illustrates the hand parameter user interface 320 including one or more buttons 321a through 321d. The spatial distribution of the buttons 321a through 321d is determined by a developer of the first video game application, as described above. Buttons 321a through 321d correspond to buttons 322a through 322d, shown on electronic device 302. As shown in FIG. 3C, the display of the buttons on user interface 320 mirrors the display of the buttons on electronic device 302. In other words, the electronic device 101 displays a hand parameter user interface 320 and electronic device 302 displays a corresponding hand parameter user interface. As shown in FIG. 3C, the electronic device 101 displays a prompt on user interface 320 to indicate to the user to tap the buttons 321a through 321d on the electronic device 302 (e.g., shown as buttons 322a through 322d). In some examples, the electronic device 302 receives taps/inputs directed towards the buttons 322a through 322d while the viewpoint of the user remains directed away from electronic device 302 (e.g., the electronic device 302 is not visible in the field of view of the electronic device 101 while the user is wearing the electronic device 101). For example, the one or more inward facing cameras of electronic device 101 detects that the user is looking through electronic device 101 at user interface 320 and not at electronic device 302.

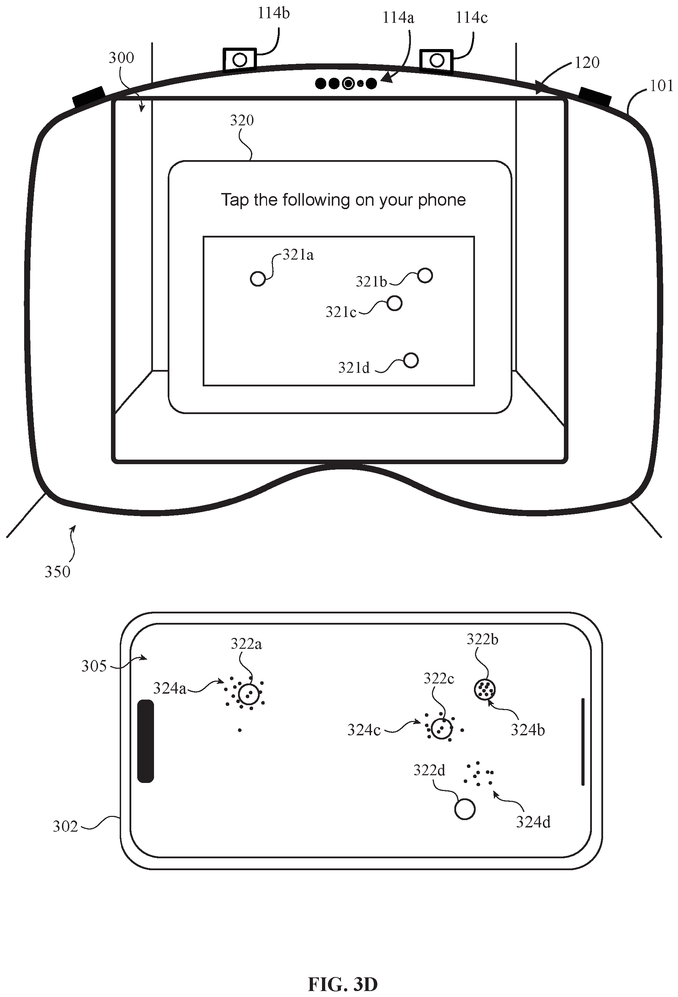

FIG. 3D illustrates the one or more inputs (e.g., inputs 324a through 324d) detected by the electronic device 302 while the electronic device 101 is displaying user interface 320. Inputs 324a through 324d each represent a plurality of inputs received directed at the respective button. For example, input 324a include inputs directed towards button 322a, input 324b include inputs directed towards button 322b, input 324c include inputs directed towards button 322c, and input 324d include inputs directed towards button 322d. The respective input (e.g., input 324a through 324d) includes a plurality of tap inputs (e.g., represented by dots). In some examples, the inputs 324a through 324d include position data of the one or more fingers of the hand when the user is tapping at the buttons 322a through 322d.

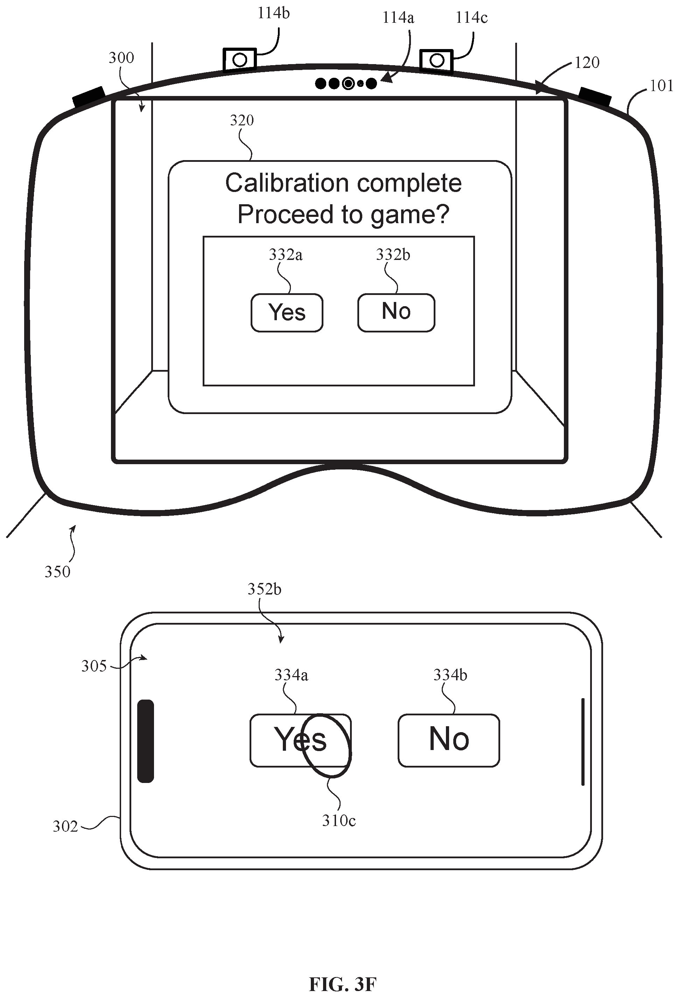

As shown in FIG. 3D, the inputs 324a through 324d are detected in different locations of the display (e.g., the touchscreen) of the electronic device 302 that are not necessarily on their corresponding buttons. As such, the electronic device 101 and/or electronic device 302 adjust the location and/or sizes of the buttons accordingly based on the tap data received from inputs 324a through 324d. FIG. 3F, discussed below, illustrates the user-specific controller user interface including updated sizes and/or locations of buttons 322a through 322d based on inputs 324a through 324d. Because the electronic device 302 does not include any physical buttons, the user relies on the visual display of buttons 321a through 321d, displayed on electronic device 101, to locate and tap the buttons 322a through 322d on electronic device 302. Since the electronic device 302 does not include any physical buttons, the electronic device 302 cannot provide any physical/tactile feedback to the user to assist in determining the location of a button. Therefore, performing the hand parameter calibration improves the accuracy in which a user will successfully tap the intended button, thereby improving the user experience when interacting with the first video game application.

In some examples, the electronic device 101 and/or electronic device 302 ceases displaying buttons 322a through 322d when the electronic device 302 receives enough/sufficient data from the inputs (e.g., input 324a through 324d) to adjust the spatial arrangement (e.g., size, shape, and/or location) of the buttons 322a through 322d. For example, the electronic device 302 detects a threshold number of inputs directed at a respective button (e.g., 5 inputs, 10 inputs, 20 inputs, etc.) that enables the electronic device 302 (e.g., and/or the electronic device 101) to generate the hand parameter data that is utilized for adjusting the spatial arrangement of the buttons 322a through 322d. Alternatively or additionally, the electronic device 302 and/or the electronic device 101 displays the buttons on the user interface 320 for a threshold amount of time (e.g., 10 seconds, 30 seconds, 1 minute, or 5 minutes) before ceasing displaying the user interface 320 and the corresponding buttons.

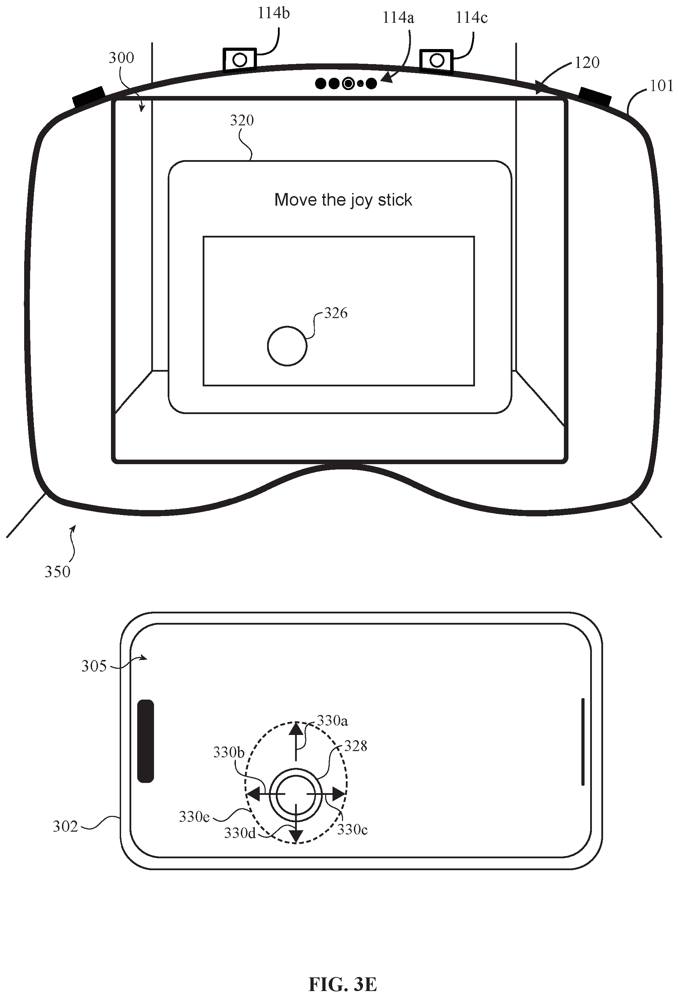

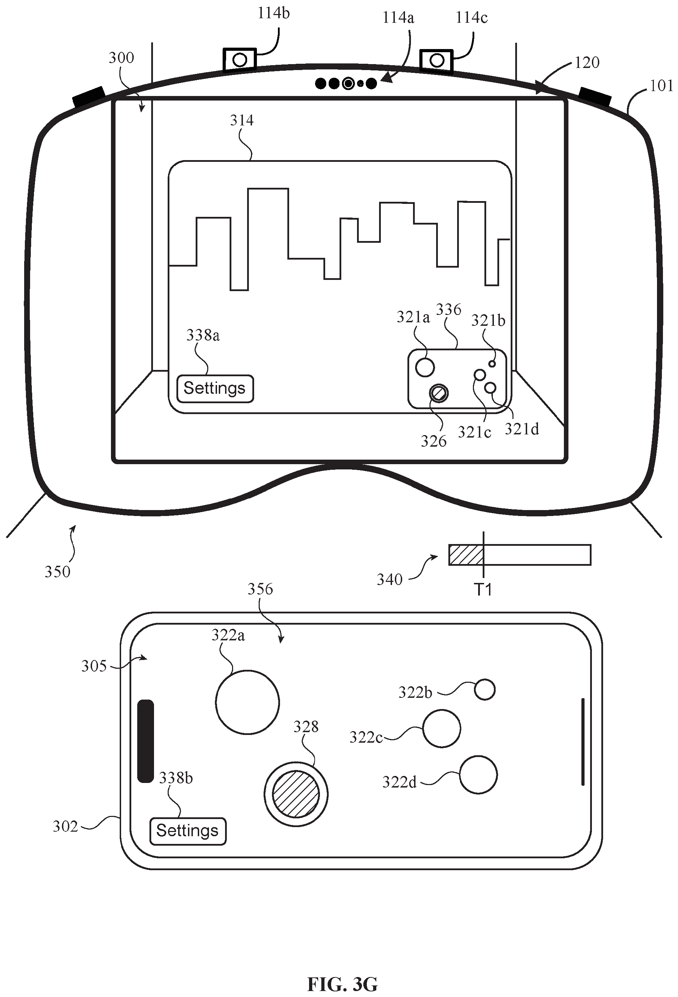

After capturing the inputs 324a through 324d shown in FIG. 3D, the electronic device 101 optionally displays an additional button, button 326, to calibrate on user interface 320, as shown in FIG. 3E. The electronic device 302 displays button 328, corresponding to button 326. In some examples, the electronic device 101 and electronic device 302 display button 326 and corresponding button 328 separately from buttons 321a through 321d and buttons 322a through 322d because button 326 (and button 328) requires a different type of input than buttons 321a through 321d (corresponding to buttons 322a through 322d). In FIG. 3E, the user interface 320 includes a prompt to "move the joystick" indicating to the user that button 326 (and button 328) corresponds to a movable joystick rather than a button to tap/click. In FIG. 3E, the electronic device 302 receives inputs 330a through 330d to move the button 328 displayed at the respective location on the display (e.g., the touchscreen) of the electronic device 302. In some examples, the inputs 330a through 330d include position and movement data corresponding to movement of the button 328. As shown in FIG. 3E, the inputs 330a through 330d for moving the joystick up, to the left, down, and to the right, respectively, on the display of the electronic device 302 are not centered on button 328. As such, in FIG. 3F discussed below, the electronic device 302 updates the size and location of button 328 in accordance with the inputs 330a through 330d. Additionally, the inputs 330a through 330d are used to identify a range of movement of the finger used to move the joystick (e.g., the thumb). In some examples, the range of movement, shown as range 330e in FIG. 3E, indicates a range of display space on the display of electronic device 302 that is suitable for placement of the button 326. For example, the electronic device 302, as shown in FIG. 3G, displays button 326 near or at the center of range 330e to allow for maximum thumb movement range. Additionally, in some examples, the electronic device 302 calibrates an input sensitivity for analog joystick movements based on the inputs received while calibrating the joystick. In some examples, calibrating the input sensitivity allows the electronic device 302 to adjust the received inputs (e.g., while using the user-specific controller user interface, described below) to match perceived user intent. For example, based on the inputs 330a through 330d, the electronic device 302 correlates the user's touch input/finger movements with an intended movement in the user interface (e.g., an intended distance to be moved, an intended pressure, and/or an intended location). In some examples, while FIG. 3E illustrates inputs 330a through 330d as inputs in the cardinal directions, the electronic device 302 can additionally or alternatively receive inputs directed towards the button 328 in any direction.

In some examples, while the electronic device 302 receives inputs 324a through 324d and inputs 330a through 330d, the electronic device 302 captures corresponding orientation data (e.g., using one or more position and/or orientation sensors of electronic device 302, described in FIG. 2) of the electronic device 302 relative to a reference (e.g., gravity, a viewpoint of the electronic device 101, a floor or ground of the physical environment 350, or other reference). In some examples, the location/position of the inputs correlate to the orientation of the electronic device 302. For example, when the electronic device 302 receives the inputs 324a through 324d and/or the inputs 330a through 330d discussed above, the electronic device 302 has a respective orientation relative to the reference. In some examples, if the orientation (e.g., angle in which the user of the electronic device 302 is holding the electronic device 302 relative to the reference) changes by a threshold amount (e.g., ±1°, ±5°, or ±10°), then the electronic device 101 and/or the electronic device 302 may prompt the user to complete a new hand parameter. For example, the electronic device 101 may display user interface element 316, shown in FIG. 3B, in response to detecting a change in orientation of electronic device 302 to prompt the user to recalibrate the controls (e.g., provide inputs similar to and/or corresponding to the inputs 324a through 324d and/or the inputs 330a through 330d).

In response to detecting a threshold amount of inputs directed towards button 328 (e.g., 4 inputs in different directions, 6 inputs, or 10 inputs) and/or after a threshold amount of time (e.g., 10 seconds, 30 seconds, 1 minute, or 5 minutes), the electronic device 101 optionally ceases displaying the prompt to calibrate button 326. Since button 326 (button 328) is the last button in the hand enrollment process, the electronic device 101 displays options 332a and 332b on user interface 320, shown in FIG. 3F. Options 325a and 325b correspond to options 334a and 334b, respectively, shown on electronic device 302 in FIG. 3F. In some examples, option 332a (and option 334a), when selected, causes the electronic device 302 to display a video game user interface and the electronic device 101 to display a user-specific controller user interface to control the video game. In some examples, option 332b (and option 334b), when selected, causes the electronic device 101 and/or the electronic device 302 to regenerate the hand parameter (e.g., by receiving/detecting inputs similar to the inputs shown in FIGs. 3D and 3E).

In FIG. 3F, the electronic device 302 detects an input including contact 310c directed towards option 334a. In response to detecting the input, the electronic device 302 displays a user-specific controller user interface 356 and the electronic device 101 displays user interface 314, shown in FIG. 3G.

In FIG. 3G, the electronic device 302 displays the user-specific controller user interface 356 in the first video game application after receiving the hand parameter, shown in FIGs. 3D and 3E. In FIG. 3G, the electronic device 302 updates the size and location of the buttons 322a through 322d and 328 based on the inputs described above. For example, the button 322a is displayed at a second size and a second location in FIG. 3G than those shown in FIG. 3D (e.g., in FIG. 3D, the button 322a is displayed at a first size and a first location). In some examples, and as described above, the electronic device 302 uses the input (e.g., input 324a) to determine the second size and second location of button 322a. As shown in FIG. 3D, input 324a includes an outlier input (e.g., the outlier dot). In some examples, the electronic device 302 (and/or the electronic device 101) determines that the input is an outlier because the majority of the inputs of input 324a were located at a different location than the outlier, and therefore, the electronic device 302 can eliminate the outlier from the calculation of the second size and the second location of the button 322a.

In some examples, the second size and/or the second location of a button may be the same size and/or location as the developer intended (e.g., the same size and/or location as the respective button shown in FIG. 3D or 3E). For example, the second size and second location of button 322b, shown in FIG. 3G, is the same as the first size and first location of button 322b, shown in FIG. 3D, because the input 324b indicates that the user was accurately and precisely tapping at the button 322b. As shown in FIG. 3D, the dots of input 324b are within the boundary of button 322b. In FIG. 3G, button 322c increased in size (e.g., to a second size) as compared to the size (e.g., a first size) of the button 322c, shown in FIG. 3D. In FIG. 3D, the inputs 324c, corresponding to inputs directed at button 322c, are accurate but not precise. Therefore, the button 322c, shown in FIG. 3G, remains at the same location (e.g., at a first location) but increases in size. In FIG. 3D, the input 324d, directed towards button 322d, are precise but not accurate. Therefore in FIG. 3G, the electronic device 302 updates the location of button 322d (e.g., from a first location to a second location), but the button 322d remains at the same size (e.g., the first size of button 322d, shown in FIG. 3D). In FIG. 3G, button 328 also changes sizes and locations based on the inputs detected in FIG. 3E (e.g., inputs 330a through 330d). In some examples, and as described above, the electronic device 302 moves the location of button 328 based on the range 330e of movement of the finger determined during the calibration. For example, in FIG. 3G, the button 328 is higher and larger on the display 305, than in FIG. 3E.

In FIG. 3G, the electronic device 101 displays user interface element 336 including buttons 321a through 321d and 326 while displaying elements of the game shown in user interface 314. In some examples, the user interface element 336 (e.g., also referred to as a game control user interface) including buttons 321a through 321d is a reproduction of the user-specific controller user interface 356, shown on electronic device 302. In some examples, the electronic device 101 displays user interface element 336 to provide a user with visual guidance and/or visual cues of the spatial arrangement of the buttons on electronic device 302, which enhances user-device interaction as to assist the user in remembering (e.g., via visual cues) the proper locations of buttons and thus prevents erroneous inputs.

In FIG. 3G, the electronic device 101 displays a selectable option 338a corresponding to the selectable option 338b displayed on electronic device 302. In some examples, the selectable option 338a and 338b, when selected, causes the electronic device 101 and/or 302 to display a settings user interface, described below.

In FIG. 3G, the electronic device 302 displays the buttons 322a through 322d and 328 at a first time, T1, as indicated by the indicator 340. In some examples, and as described below, the electronic device 302 captures additional hand parameter data over a time interval (e.g., as the user is playing and/or interacting with the controller user interface 356). For example, over time, the electronic device 302 may detect a change in input pattern of where the electronic device 302 is receiving inputs directed towards respective buttons displayed on the display 305.

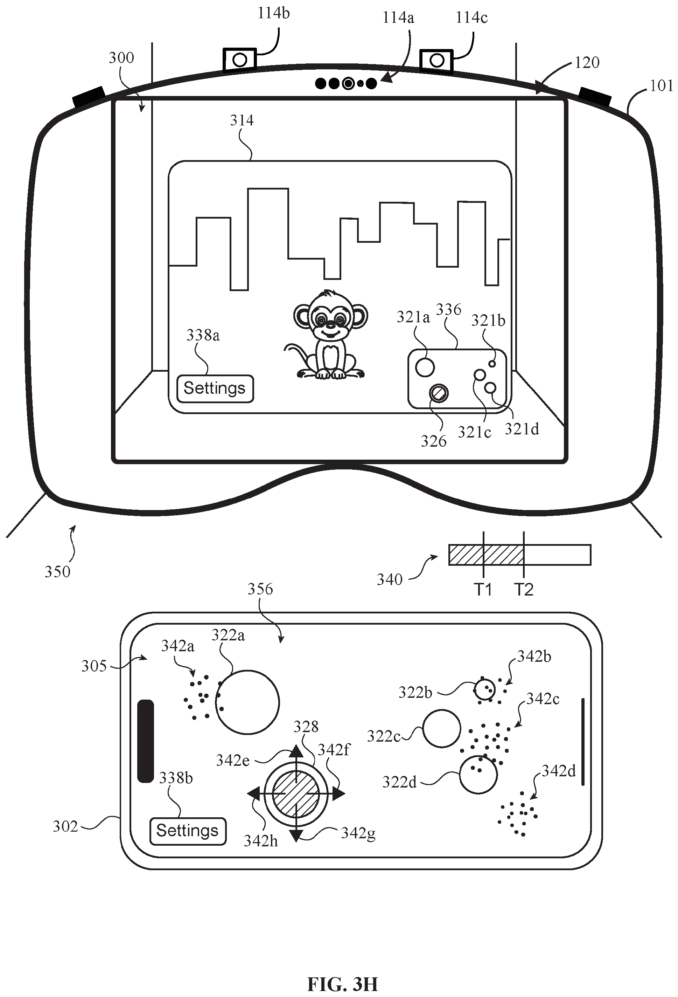

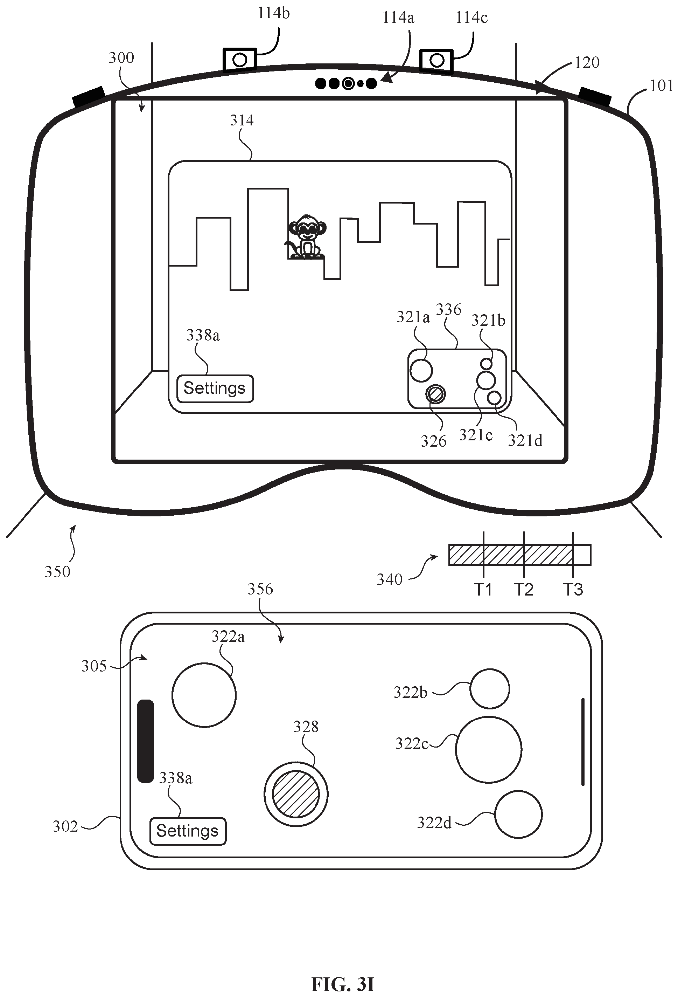

FIG. 3H illustrates a representation of electronic device 302 collecting hand parameter data over a time interval (e.g., T1 to T2) as the electronic device 302 receives inputs directed towards the respective buttons. In FIG. 3H, the electronic device 302 detects inputs 342a directed towards button 322a, inputs 342b directed towards button 322b, inputs 342c directed towards button 322c, inputs 342d directed towards button 322d, and inputs 342e through 342h directed towards button 328. As shown in FIG. 3H, the inputs 342a indicate that the electronic device 302 has been receiving inputs further left than where the button 322a is located. As a result, the electronic device 302, at time T3, updates the location of button 322a to correspond to the location of the inputs 342a from the second location to a third location, shown in FIG. 3I. In some examples, the electronic device 302 also updates the size of button 322a to correspond to inputs 342a (e.g., by updating the size from a second size to a third size), as shown in FIG. 3I. In FIG. 3H, the inputs 324b indicate that the electronic device 302 has been receiving inputs at an appropriate location relative to the location of button 322b. As such, in FIG. 3I at time T3, the electronic device 302 continues to display button 322b at the second size and location. In FIG. 3H, the inputs 342c indicate that the electronic device 302 has been receiving inputs corresponding to the selection of button 322c at a location to the right of the current location of button 322c. The inputs 342c are also less accurate than previously indicated during the hand enrollment. Therefore, in FIG. 3I, the electronic device 302 updates the location of button 322c from the second location to a third location and updates the size of button 322c from a second size to a third size, larger than the second size. In FIG. 3H, the inputs 342d indicate that the electronic device 302 has been receiving inputs corresponding to the selection of button 322d at a location lower and to the right of the current location of button 322d. Therefore, in FIG. 3I, the electronic device 302 updates the location of button 322d from a second location to a third location based on the location of the inputs 342d. Because the inputs 342d were relatively (e.g., on average) as accurate as the inputs 324d, shown in FIG. 3D, the electronic device 302 does not change the size or location of button 322d in FIG. 3I. In FIG. 3H, the inputs 342e through 342h directed towards button 328 illustrate that the electronic device 302 does not need to update the size or location of button 328 because the inputs 342e through 342h are precise and accurate. As such, in FIG. 3I, the button 328 remains in the same location as in FIG. 3H.

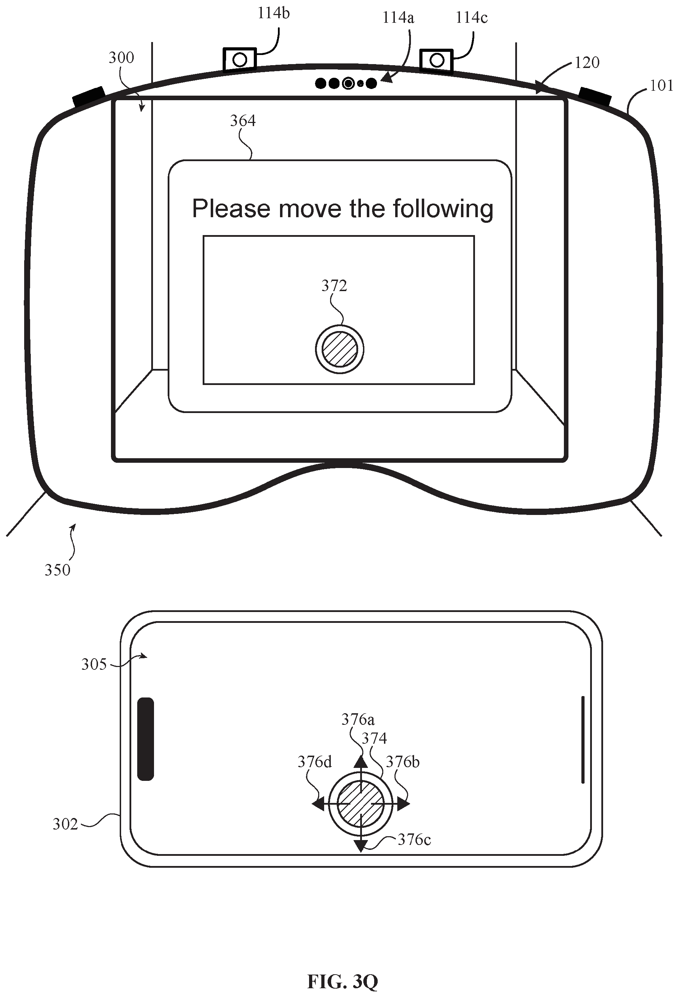

As described herein, accuracy refers to how close the detected inputs are to the true or accepted value (e.g., the location of the buttons). Precision refers to how close the inputs are to each other (e.g., overlap between touch input locations). For example, the collection of inputs can be accurate but not precise (e.g., the inputs 324c relative to button 322c are accurate but not precise, shown in Fig. 3D), precise but not accurate (e.g., the inputs 370a relative to button 368a, shown in Fig. 3Q), or accurate and precise (e.g., inputs 324b relative to button 322b, as shown in Fig. 3D).

FIG. 3I illustrates the electronic device 302 updating the locations of buttons 322a through 322d and 328, at time T3, based on the inputs received while the user is interacting with user interface 356 during the time interval T1-T2. The electronic device 302 updates user interface 356 and the electronic device 101 updates user interface element 336 corresponding to user interface 356 according to the updates described above. In some examples, the electronic device 302 and/or the electronic device 101 update their respective indications of the buttons after the user closes and reopens the first video game application. For example, the electronic device 101 and/or the electronic device 302 cease displaying the respective user interfaces of the first video game application and in response to detecting an input to open the respective user interface, the electronic device 101 and/or the electronic device 302 update the size and locations of the respective buttons based on hand parameter gathered during the time interval T1 to T2.

In some examples, changing the location of buttons in response to inputs is described in greater detail above, with reference to the calibration of the buttons using the hand parameter.

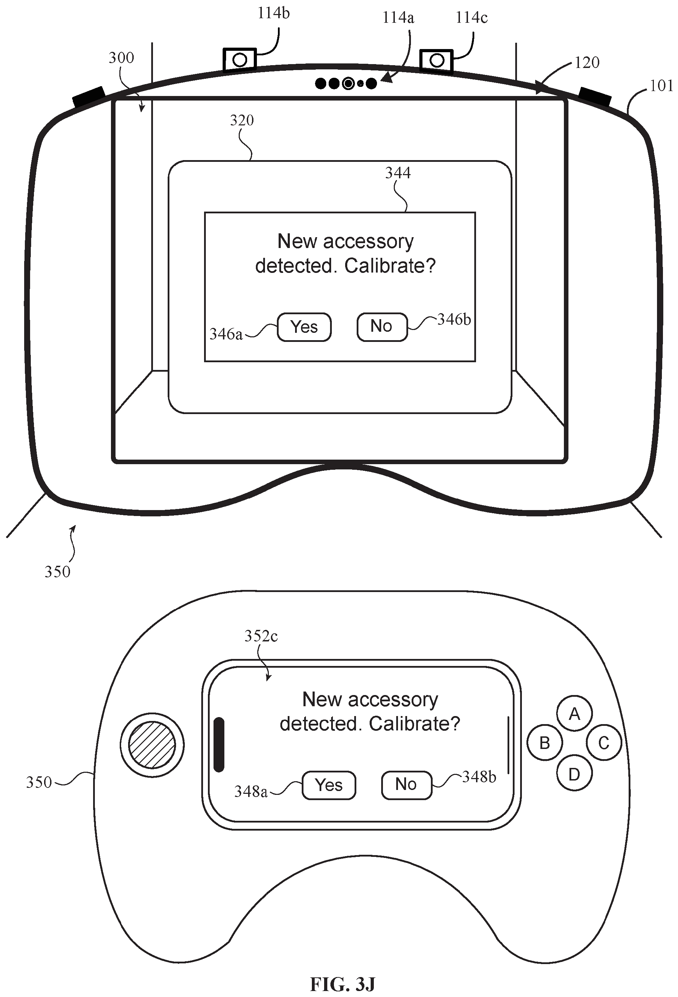

FIG. 3J illustrates an example where the electronic device 302 is associated with a device accessory 351. For example, the user connects an accessory 351 physically (e.g., the accessory 351 is physically attached to electronic device 302 as shown in FIG. 3J) and/or wirelessly (e.g., via wireless connections such as Bluetooth, Wi-Fi, NFC, and/or wired connections as described above) to electronic device 302. For example, the accessory is a case, an external video game controller, and/or other phone/electronic device accessories. In FIG. 3J, the electronic device 101 displays user interface element 344 on user interface 320 in response to detecting the addition of accessory 351 to electronic device 302. Electronic device 302 displays a corresponding user interface 352c (e.g., having one or more characteristics of user interface element 344). Element 344 includes options 346a and 346b, corresponding to options 348a and 348b shown on electronic device 302. Option 346a (and option 348a), when selected, optionally causes the electronic device 101 and/or the electronic device 302 to reinitiate the hand enrollment process including displaying the hand parameter user interface to calibrate the one or more buttons. Option 346a (and option 348a), when selected, optionally causes the electronic device 101 and/or the electronic device 302 to forgo reinitiating the hand enrollment process.

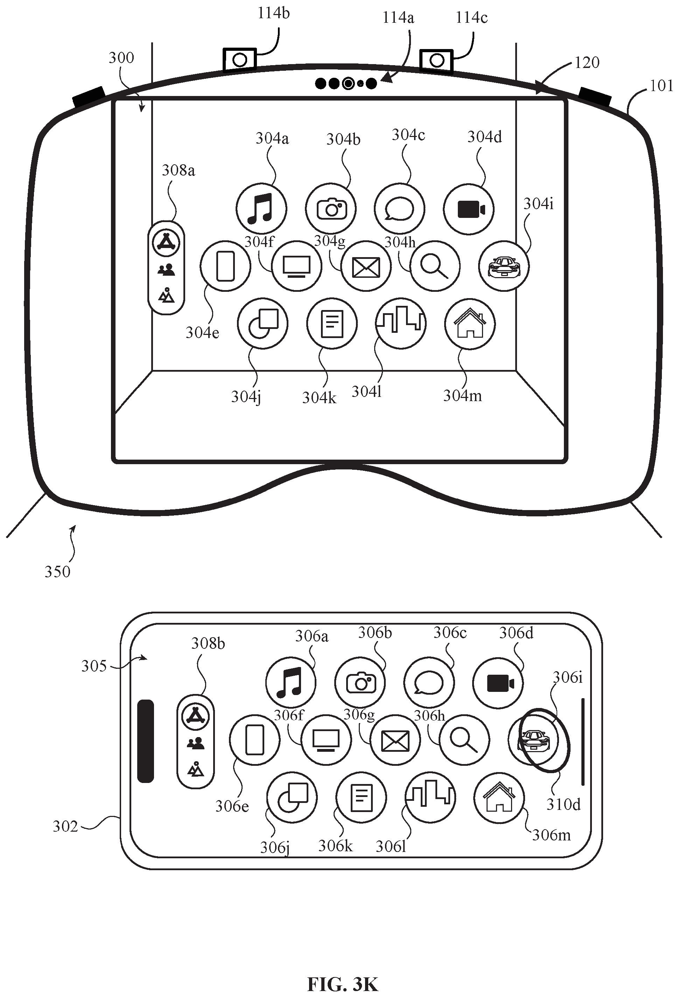

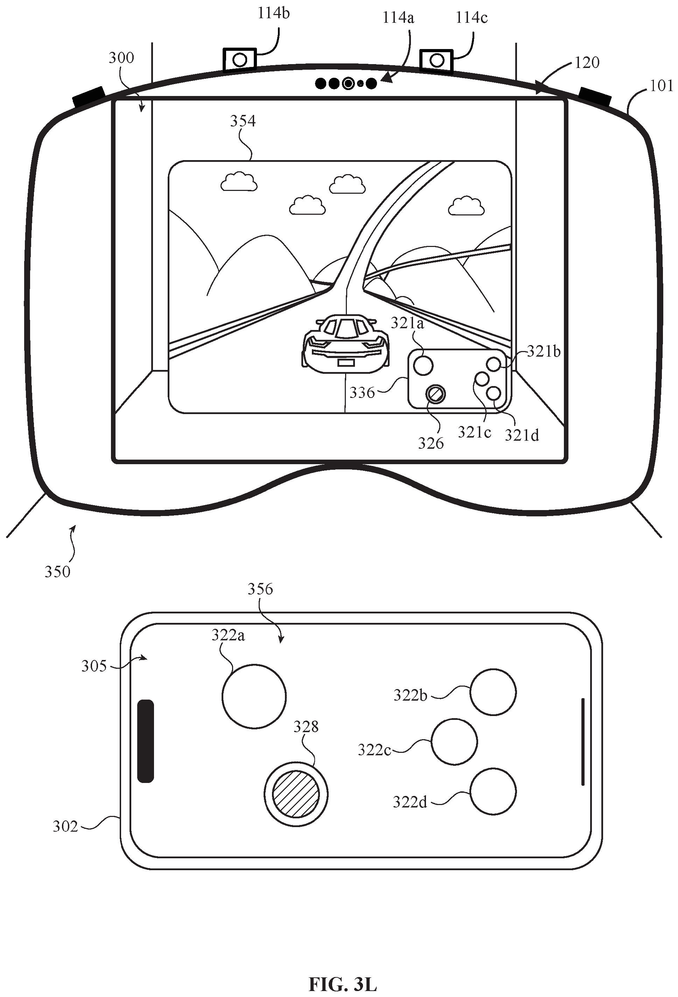

In FIG. 3K, the electronic device 101 displays the home screen user interface including options 304a through 304m and menu 308a described in greater detail with reference to FIG. 3A. In FIG. 3K, the electronic device 302 displays, on display 305, options 306a through 306m, corresponding to options 304a through 304m. The electronic device 302 also displays menu 308b corresponding to menu 308a. In FIG. 3K, the electronic device 302 detects an input including contact 310d, directed toward option 306i (corresponding to option 304i) to open a second video game application. In response to detecting the input in FIG. 3K, the electronic device 101 displays a user interface 354 corresponding to the second video game application, shown in FIG. 3L.

FIG. 3L illustrates an example where the electronic device 101 and/or the electronic device 302 use the hand parameter data and the user-specific controller user interface 356 created while the electronic device 101 was displaying a user interface of the first video game application for the second video game application. In FIG. 3L, the electronic device 101 displays user interface 354, corresponding to the second video game application, including user interface element 336, which is a representation of the user-specific controller user interface shown on the display 305 of electronic device 302. In some examples, the hand parameter data is used for a plurality of applications. As shown in FIG. 3L, the electronic device 302 and/or the electronic device 101 use the same spatial arrangement of buttons (e.g., buttons 322a through 322d and 328) as in the first video game application.

Alternatively, in some examples, the electronic device 302 and/or the electronic device 101 use the hand parameter received while calibrating the buttons of the first video game application to calibrate the buttons associated with the second video game application. For example, the electronic device 302 and/or the electronic device 101 use the accuracy and/or precision data of inputs relative to button locations to determine button locations and/or sizes of the buttons associated with the second video game application. In some examples, the electronic device 302 and/or electronic device 101 uses data relating to the range of movement of the one or more fingers based on the inputs received during the calibration of the buttons of the first video game to inform the size and/or location of buttons for other video games and/or other applications. In some examples, the button locations (e.g., in the controller user interface) of the second video game application is different from the button locations (e.g., in the controller user interface) of the first video game application. As described above, a developer of the respective video game application (e.g., or application in general) determines a size and location of the buttons on the controller user interface. The hand parameter data is used to customize the size and/or location of the buttons.

In some examples, the hand parameter data is associated with a user and optionally an application. For example, the hand parameter data is linked to an account associated with a respective application and the hand parameter data (and the user-specific controller user interface) is accessible via an electronic device associated with the respective user account. For example, in response to detecting a login using a user account on a respective application, the electronic device 101 and/or the electronic device 302 receives hand parameter data associated with the user account. In some examples, the hand parameter data is used for a plurality of applications and in some such examples, the electronic device 101 and/or the electronic device 302 optionally associates the hand parameter data with a user account of an electronic device (e.g., instead of a user account of a specific application).

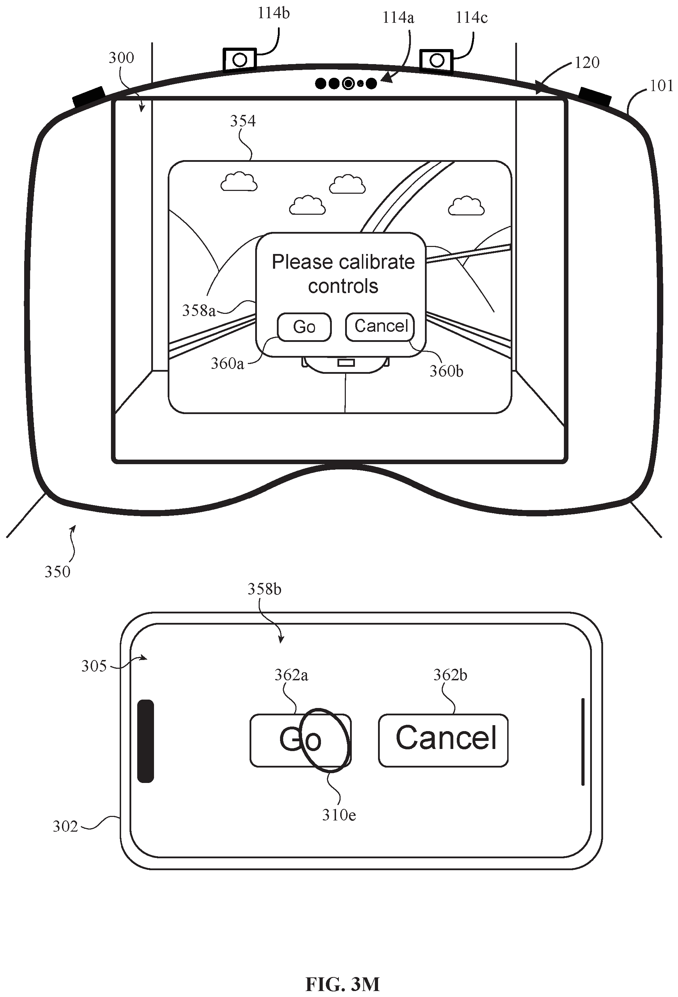

In some examples, each application includes its own hand parameter data (e.g., the second video game application includes a second hand parameter and the first video game application include a first hand parameter). FIG. 3M illustrates an example where, in response to detecting the input in FIG. 3K, the electronic device 101 displays a user interface 354 of the second video game application including element 358a to calibrate the buttons associated with the second video game application. Element 358a includes options 360a and 360b, which have one or more characteristics of options 323a and 323b, shown in FIG. 3B, and correspond to options 362a and 362b, respectively, shown on the display 305 of electronic device 302 in FIG. 3M. In FIG. 3M, the electronic device 302 detects an input including contact 310e directed towards option 362a (corresponding to option 360a). In response to detecting the input in FIG. 3M, the electronic device 101 displays hand parameter user interface 364, which has one or more characteristics of hand parameter user interface 320, described above.

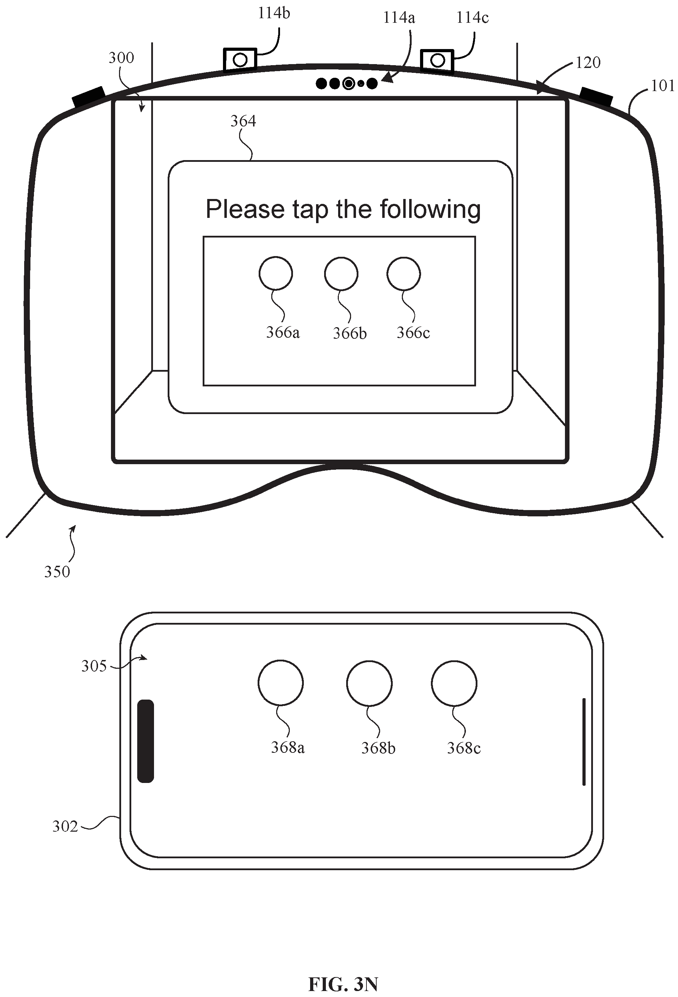

FIG. 3N illustrates the hand parameter user interface 364 associated with the second video game application. In FIG. 3N, the electronic device 101 displays buttons 366a through 366c and electronic device 302 displays corresponding buttons 368a through 368c. Buttons 366a through 366c and buttons 368a through 368c have one or more characteristics of the buttons 321a through 321d and 322a through 322d, respectively, which are described above.

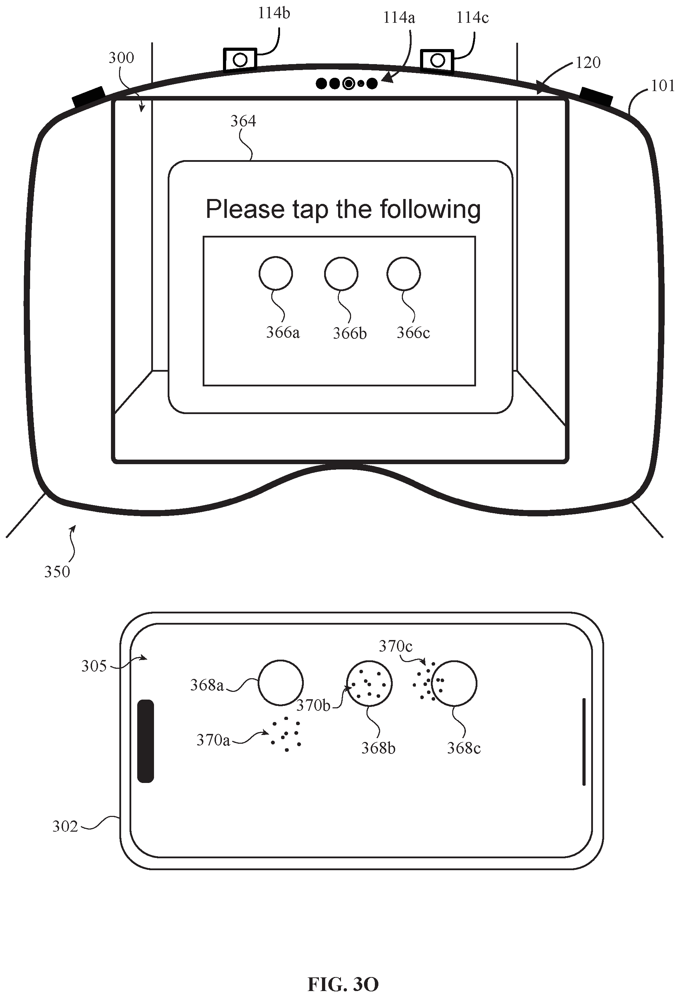

In FIG. 3O, the electronic device 302 detects a plurality of inputs directed towards the buttons 368a through 368c to calibrate the size and location of the respective buttons as part of the hand enrollment process. Inputs 370a correspond to inputs directed towards button 368a, inputs 370b correspond to inputs directed towards button 368b, and inputs 370c correspond to inputs directed towards button 368c. Calibrating the buttons based on the inputs is described in greater detail above.

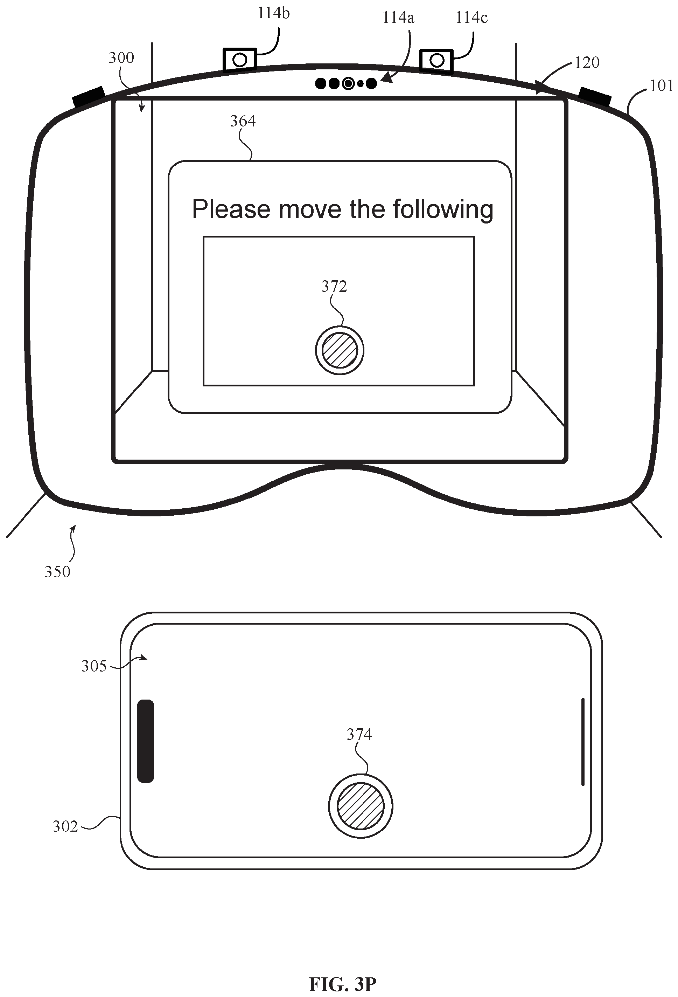

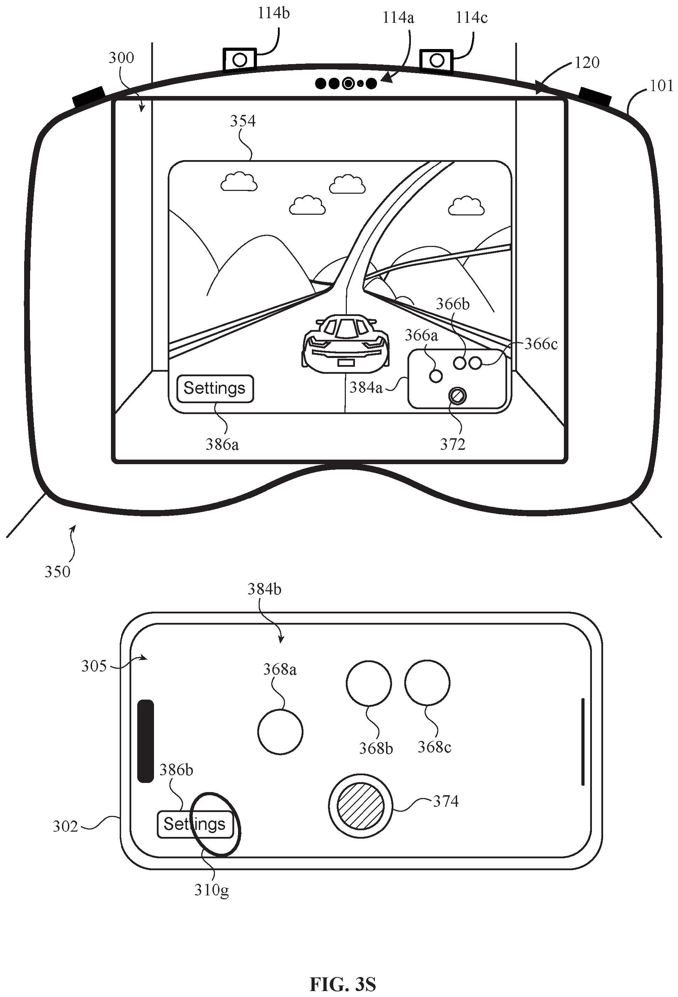

After detecting the threshold number of inputs in FIG. 3O (e.g., the threshold number of inputs is described in greater detail with reference to FIG. 3D), the electronic device 101 and/or the electronic device 302 displays buttons 372 and 374, respectively, as shown in FIG. 3P. In some examples, the button 372, which corresponds to button 374, is a representation of a joystick (e.g., a button that responds to translational and/or rotational movement, rather than taps). In FIG. 3Q, the electronic device 302 receives a plurality of inputs 376a through 376d directed towards the button 374 on the display 305 (e.g., the touchscreen of the electronic device 302). In response to detecting the inputs shown in FIG. 3Q, the electronic device 302 determines a size and/or location of button 376, shown in FIG. 3S. Determining the spatial arrangement of the buttons based on hand parameter data is described in greater detail above.

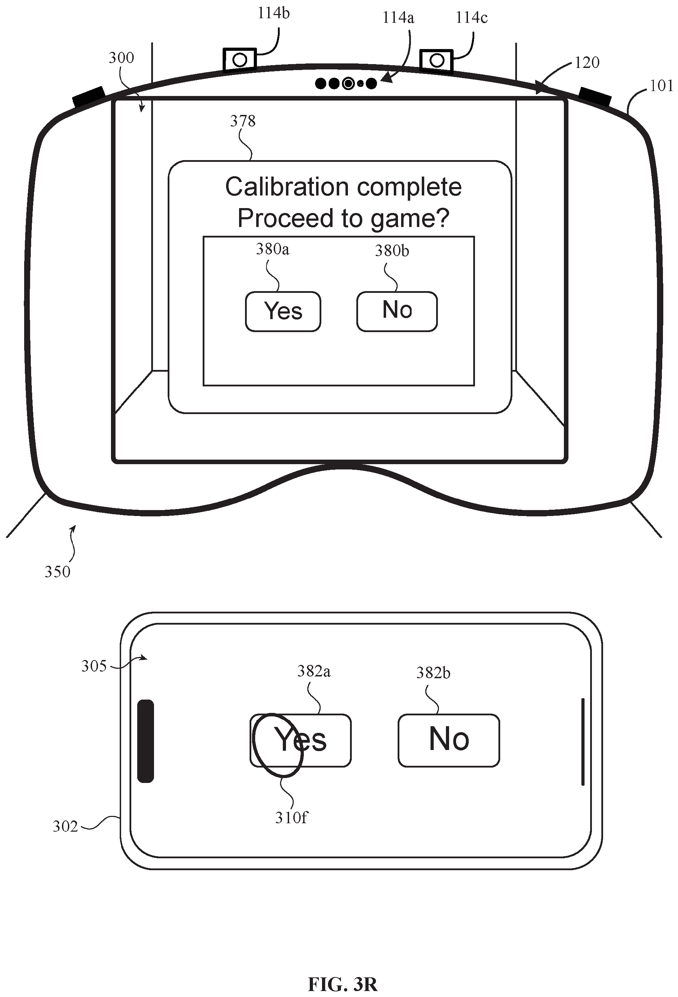

After detecting the inputs in FIG. 3Q, the electronic device 101 and/or the electronic device 302 displays options 380a and 380b, and options 328a and 328b, respectively, as shown in FIG. 3R. As described above, after detecting the threshold number of inputs for each button of the plurality of buttons on the controller user interface corresponding to the second video game application, the electronic device 101 displays options 380a and 380b on user interface 378 and electronic device 302 displays options 382a and 382b on the display 305. Options 380a and 380b have one or more characteristics of options 332a and 332b shown in FIG. 3F. Options 382a and 382b have one or more characteristics of options 334a and 334b shown in FIG. 3F. In Fig. 3R, the electronic device 302 detects an input including contact 310f directed towards option 382a. In response to detecting the input shown in FIG. 3R, the electronic device 101 redisplays user interface 354 including element 384, a representation of the user-specified controller user interface of the second video game application, as shown in FIG. 3S.

FIG. 3S illustrates element 384 including buttons 366a through 366c and 372. The buttons 366a through 366c and 372 are each displayed at a location and with a size in accordance with the inputs detected during the hand enrollment process. Element 384 has one or more characteristics of user interface element 336, shown in FIG. 3G. The buttons 366a through 366c and 372 correspond to the buttons 368a through 368c and 374, shown on the electronic device 101. As shown in FIG. 3S, the buttons 368a through 368c and 374 are each displayed at a size and location based on the inputs detected during the hand enrollment process illustrated in FIG. 3O. In FIG. 3S, the electronic device 101 displays option 386a, having one or more characteristics of selectable option 338a, shown in FIG. 3I. In FIG. 3S, the electronic device 302 displays option 386b, corresponding to option 386a and having one or more characteristics of selectable option 338b, shown in FIG. 3I.

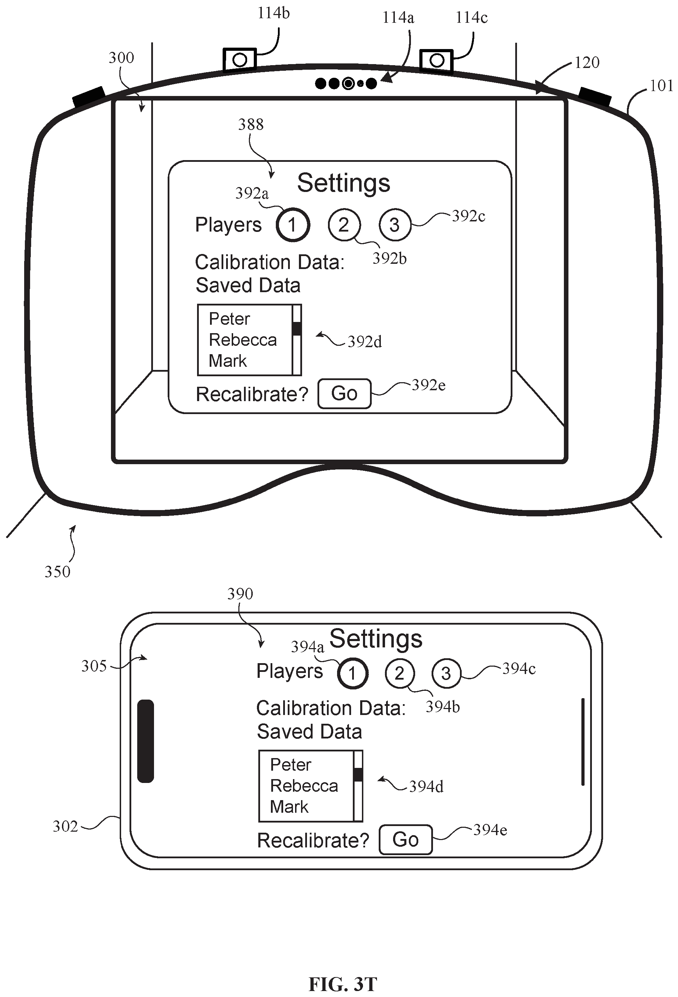

In FIG. 3S, the electronic device 302 detects an input including contact 310g directed towards option 386b. In response to detecting the input, the electronic device 101 displays a settings user interface 388, as shown in FIG. 3T.

FIG. 3T illustrates the electronic device 101 displaying a settings user interface 388 and electronic device 302 displaying a corresponding settings user interface 390. User interface 390 includes options 394a through 394c (which correspond to options 392a through 392c on user interface 388). In some examples, options 394a through 394c are selectable to change the number of players that are playing the respective game (e.g., a 1-player mode, 2-player mode, and a 3-player mode, respectively). User interface 390 includes menu 394d, corresponding to menu 392d shown on user interface 388. In some examples, menu 394d includes a plurality of options (e.g., "Peter", "Rebecca", and "Mark"), which correspond to a user that has completed the hand enrollment process. In some examples, multiple users may use the electronic device 302 to interact with electronic device 101. In some examples, the electronic device 302 and/or the electronic device 101 may associate and/or store hand parameter data with a user (e.g., a first hand parameter data with a first user and a second hand parameter data with a second user). In some examples, an option of menu 394d, when selected, causes the electronic device 302 to display a user-specific controller user interface associated with the selected user. User interface 390 includes option 394e, corresponding to option 392e, shown on user interface 388. Option 394e, when selected, causes the electronic device 302 and/or the electronic device 101 to redisplay the hand parameter user interface such that the electronic device 302 can receive a second hand parameter to generate the user-specific controller user interface.

It is understood that the examples shown and described herein are merely exemplary and that additional and/or alternative elements may be provided within the three-dimensional environment for calibrating one or more buttons based on hand parameter data. It should be understood that the appearance, shape, form, and size of each of the various user interface elements and objects shown and described herein are exemplary and that alternative appearances, shapes, forms and/or sizes may be provided. For example, the virtual objects representative of hand parameter user interface 364 and/or options 304a through 304m of the home screen user interface may be provided in alternative shapes than those shown, such as a rectangular shape, circular shape, triangular shape, etc. In some examples, the various selectable affordances (e.g., selectable option 304a through 304m, options 323a and 323b, options 332a and 332b, option 346a and 346b, option 360a and 360b, option 380a and 380b, option 386a, and options 392a through 392e) described herein may be selected verbally via user verbal commands (e.g., "select option" or "select virtual object" verbal command). Additionally or alternatively, in some examples, the various options, user interface elements, control elements, etc. described herein may be selected and/or manipulated via user input received via one or more input devices in communication with the electronic device (or electronic devices). For example, selection input may be received via physical input devices, such as a mouse, trackpad, keyboard, etc. in communication with the electronic devices (or electronic devices), or a physical button integrated with the electronic devices (or electronic devices).

FIG. 4 illustrates a flow diagram illustrating an example process for receiving a hand parameter and generating a user-generated controller user interface according to some examples of the disclosure. In some examples, process 400 begins at an electronic device in communication with a first display, a second display, and an input device (optionally one or more input devices). In some examples, process 400 alternatively begins at an electronic device in communication with a display and an input device (e.g., optionally one or more input devices). In some examples, the electronic device is a mobile electronic device similar or corresponding to electronic device 260 of FIG. 2B including a first display, such as a touch sensitive display. In some examples, the second display is optionally a head-mounted display similar or corresponding to electronic device 201 of FIG. 2A. As shown in FIG. 4, in some examples, at 402, the electronic device obtains a hand parameter associated with a range of hand movements. For example, the electronic device (e.g., electronic device 302 in FIG. 3A) obtains a plurality of inputs 324a through 324d, shown in FIG. 3D, that are associated with finger/hand movements.

In some examples, at 404, the electronic device initiates a first application including a controller user interface. For example, in FIG. 3B, the electronic device 302/electronic device 101 initiates a first video game application with a controller user interface, which is shown in FIG. 3D. In some examples, at 406, the electronic device generates a user-specific controller user interface based on the hand parameter. For example, after receiving the inputs shown in FIGs. 3D and 3E directed towards the controller user interface, the electronic device 302 displays a user-specific controller user interface based on the inputs, shown in FIG. 3G.

In some examples, at 408, the electronic device displays, via the first display (e.g., display 305), the user-specific controller user interface as the controller user interface in the first application, wherein the user-specific controller user interface is generated based on the hand parameter. For example, as shown in FIG. 3G, the buttons 322a through 322d and 328 are updated based on the hand parameter captured in FIGs. 3D and 3E.

It is understood that process 400 is an example and that more, fewer, or different operations can be performed in the same or in a different order. Additionally, the operations in process 400 described above are, optionally, implemented by running one or more functional modules in an information processing apparatus such as general-purpose processors (e.g., as described with respect to FIGs. 2A-2B) or application specific chips, and/or by other components of FIGs. 2A-2B.

Therefore, according to the above, some examples of the disclosure are directed to a method, comprising at an electronic device in communication with a first display, a second display, and an input device: obtaining a hand parameter associated with a range of hand movements; initiating a first application including a controller user interface; generating a user-specific controller user interface based on the hand parameter; and displaying, via the first display, the user-specific controller user interface as the controller user interface in the first application, wherein the user-specific controller user interface is generated based on the hand parameter. Additionally or alternatively to one of more of the examples disclosed above, in some examples, the user-specific controller user interface includes virtual buttons on the controller user interface corresponding to the first application. Additionally or alternatively to one of more of the examples disclosed above, in some examples, obtaining the hand parameter further comprises: detecting, at the electronic device, a first input corresponding to a request to open the first application; and in response to detecting the first input: in accordance with a determination that the first input satisfies one or more criteria including a criterion that is satisfied when hand enrollment is not completed, displaying a hand parameter user interface associated with the hand enrollment; while displaying the hand parameter user interface, detecting, via the input device, one or more second inputs directed towards the hand parameter user interface to obtain the hand parameter associated with the range of hand movements; and in accordance with a determination that the first input does not satisfy the one or more criteria: forgoing displaying the hand parameter user interface; and displaying, via the first display, the user-specific controller user interface corresponding to the first application. Additionally or alternatively to one of more of the examples disclosed above, in some examples, while displaying the controller user interface corresponding to the first application, the method further comprises detecting, via the input device, an input corresponding to a request to display a settings user interface of the first application; and in response to detecting the input, displaying the settings user interface includes a selectable option to display a hand parameter user interface to obtain the hand parameter. Additionally or alternatively to one of more of the examples disclosed above, in some examples, the method further comprises after obtaining the hand parameter associated with the range of hand movements, detecting, via the input device, one or more second inputs, including a respective input directed to the selectable option corresponding to a request to regenerate the hand parameter; and in response to detecting the one or more second inputs: displaying the hand parameter user interface; and initiating a process to obtain a second hand parameter associated with the range of hand movements. Additionally or alternatively to one of more of the examples disclosed above, in some examples, the method further comprises after obtaining the hand parameter associated with the range of hand movements, detecting, via the input device, a first input corresponding to a request to open a second application, different from the first application; and in response to detecting the first input: in accordance with a determination that the first input satisfies one or more second criteria, displaying, via the first display, a second controller user interface that is based on a second hand parameter, different from the hand parameter, associated with the range of hand movements; and in accordance with a determination that the first input does not satisfy the one or more second criteria, displaying, via the first display, a second hand parameter user interface corresponding to the second application for obtaining the second hand parameter. Additionally or alternatively to one of more of the examples disclosed above, in some examples, the method further comprises after obtaining the hand parameter for the first application, detecting, via the input device, a first input corresponding to a request to open a second application, different from the first application; and in response to detecting the first input: in accordance with a determination that the first input does not satisfy the one or more criteria, displaying, via the first display, the user-specific controller user interface based on the hand parameter. Additionally or alternatively to one of more of the examples disclosed above, in some examples, obtaining the hand parameter includes: in accordance with a determination that a user of the electronic device is a first user, associating the hand parameter with the first user; and in accordance with a determination that the user of the electronic device is a second user, different than the first user, associating the hand parameter with the second user. Additionally or alternatively to one of more of the examples disclosed above, in some examples, the determination that the user of the electronic device is the first user is based on a determination that a user account associated with the first application corresponds to a first account of the first user; and the determination that the user of the electronic device is the second user is based on a determination that the user account associated with the first application corresponds to a second account of the second user. Additionally or alternatively to one of more of the examples disclosed above, in some examples, the method further comprises after obtaining the hand parameter, detecting, via the input device, a first input corresponding to request to open a second application; and in response to detecting the first input: in accordance with a determination that one or more first criteria are satisfied, including a criterion that is satisfied when the electronic device is associated with a respective object: displaying a hand parameter user interface to obtain a second hand parameter associated with the range of hand movements; and obtaining, via the input device, the second hand parameter in response to detecting one or more second inputs directed to the hand parameter user interface. Additionally or alternatively to one of more of the examples disclosed above, in some examples, the hand parameter includes position data of one or more fingers of a hand of a user of the electronic device relative to the first display. Additionally or alternatively to one of more of the examples disclosed above, in some examples, the hand parameter is based on an orientation of the electronic device while obtaining the hand parameter. Additionally or alternatively to one of more of the examples disclosed above, in some examples, obtaining the hand parameter includes: displaying a hand parameter user interface for obtaining the hand parameter, wherein displaying the hand parameter user interface includes: in accordance with a determination that a developer of the first application has provided first data indicating a first respective spatial distribution of a respective plurality of buttons in the controller user interface corresponding to the first application, displaying, via the first display, a plurality of buttons in the hand parameter user interface with a first spatial distribution that is based on the first data; and in accordance with a determination that the developer of the first application has provided second data indicating a second respective spatial distribution, different from the first respective spatial distribution, of the respective plurality of buttons in the controller user interface, displaying the plurality of buttons in the hand parameter user interface with a second spatial distribution, different from the first spatial distribution, that is based on the second data. Additionally or alternatively to one of more of the examples disclosed above, in some examples, displaying the hand parameter user interface includes displaying a second hand parameter user interface on the second display. Additionally or alternatively to one of more of the examples disclosed above, in some examples, displaying the second hand parameter user interface includes displaying one or more prompts for obtaining the hand parameter. Additionally or alternatively to one of more of the examples disclosed above, in some examples, in accordance with a determination that the hand parameter is a first hand parameter, displaying the one or more virtual buttons on the controller user interface includes displaying the one or more virtual buttons at one or more first positions with one or more first sizes; and in accordance with a determination that the hand parameter is a second hand parameter, displaying the one or more virtual buttons on the controller user interface includes displaying the one or more virtual buttons at one or more second positions with one or more second sizes, different than the one or more first positions with the one or more first sizes. Additionally or alternatively to one of more of the examples disclosed above, in some examples, the one or more first positions are based on one or more first locations on the first display and that are associated with one or more inputs received while obtaining the first hand parameter; and the one or more second positions are based on one or more second locations, different than the one or more first locations, on the first display and that are associated with the one or more inputs received while obtaining the second hand parameter. Additionally or alternatively to one of more of the examples disclosed above, in some examples, displaying the one or more virtual buttons with the one or more first sizes is based on a first accuracy of finger placement relative to the one or more first locations when obtaining the first hand parameter; and displaying the one or more virtual buttons with the one or more second sizes is based on a second accuracy of finger placement relative to the one or more second locations when obtaining the second hand parameter. Additionally or alternatively to one of more of the examples disclosed above, in some examples, the method further comprises while displaying the controller user interface of the first application, concurrently displaying, on the second display, a game control user interface corresponding to the controller user interface. Additionally or alternatively to one of more of the examples disclosed above, in some examples, the method further comprises after obtaining the hand parameter, collecting, over a first time interval, interaction data associated with a sequence of inputs directed toward the user-specific controller user interface detected via the input device; and after collecting the interaction data over the first time interval: updating the hand parameter to a second hand parameter in accordance with the interaction data; and updating one or more of visual properties of the user-specific controller user interface corresponding to the first application based on the second hand parameter. Additionally or alternatively to one of more of the examples disclosed above, in some examples, the method further comprises after obtaining the hand parameter associated with the range of hand movements, detecting, via the input device, a first input corresponding to a request to open a second application, different from the first application; and in response to detecting the first input: displaying, via the second display, a user interface of the second application; and displaying, via the first display, a second controller user interface corresponding to the second application, wherein the second controller user interface includes one or more second virtual buttons that are displayed based on the hand parameter.

Some examples of the disclosure are directed to an electronic device, comprising: one or more processors; memory; and one or more programs stored in the memory and configured to be executed by the one or more processors, the one or more programs including instructions for performing any of the above methods.

Some examples of the disclosure are directed to a non-transitory computer readable storage medium storing one or more programs, the one or more programs comprising instructions, which when executed by one or more processors of an electronic device, cause the electronic device to perform any of the above methods.

Some examples of the disclosure are directed to an electronic device, comprising one or more processors, memory, and means for performing any of the above methods.

Some examples of the disclosure are directed to an information processing apparatus for use in an electronic device, the information processing apparatus comprising means for performing any of the above methods.

The present disclosure contemplates that in some examples, the data utilized can include personal information data that uniquely identifies or can be used to contact or locate a specific person. Such personal information data can include demographic data, content consumption activity, location-based data, telephone numbers, email addresses, twitter ID's, home addresses, data or records relating to a user's health or level of fitness (e.g., vital signs measurements, medication information, exercise information), date of birth, or any other identifying or personal information. Specifically, as described herein, one aspect of the present disclosure is tracking a user's touch data.

The present disclosure recognizes that the use of such personal information data, in the present technology, can be used to the benefit of users. For example, personal information data can be used to display suggested text that changes based on changes in a user's biometric data. For example, the suggested text is updated based on changes to the user's age, height, weight, and/or health history.

The present disclosure contemplates that the entities responsible for the collection, analysis, disclosure, transfer, storage, or other use of such personal information data will comply with well-established privacy policies and/or privacy practices. In particular, such entities should implement and consistently use privacy policies and practices that are generally recognized as meeting or exceeding industry or governmental requirements for maintaining personal information data private and secure. Such policies should be easily accessible by users, and should be updated as the collection and/or use of data changes. Personal information from users should be collected for legitimate and reasonable uses of the entity and not shared or sold outside of those legitimate uses. Further, such collection/sharing should occur after receiving the informed consent of the users. Additionally, such entities should consider taking any needed steps for safeguarding and securing access to such personal information data and ensuring that others with access to the personal information data adhere to their privacy policies and procedures. Further, such entities can subject themselves to evaluation by third parties to certify their adherence to widely accepted privacy policies and practices. In addition, policies and practices should be adapted for the particular types of personal information data being collected and/or accessed and adapted to applicable laws and standards, including jurisdiction-specific considerations. For instance, in the US, collection of or access to certain health data can be governed by federal and/or state laws, such as the Health Insurance Portability and Accountability Act (HIPAA); whereas health data in other countries can be subject to other regulations and policies and should be handled accordingly. Hence different privacy practices should be maintained for different personal data types in each country.

Despite the foregoing, the present disclosure also contemplates examples in which users selectively block the use of, or access to, personal information data. That is, the present disclosure contemplates that hardware and/or software elements can be provided to prevent or block access to such personal information data. For example, the present technology can be configured to allow users to select to "opt in" or "opt out" of participation in the collection of personal information data during registration for services or anytime thereafter. In another example, users can select not to enable recording of personal information data in a specific application (e.g., first application and/or second application). In addition to providing "opt in" and "opt out" options, the present disclosure contemplates providing notifications relating to the access or use of personal information. For instance, a user can be notified upon initiating collection that their personal information data will be accessed and then reminded again just before personal information data is accessed by the one or more devices.

Moreover, it is the intent of the present disclosure that personal information data should be managed and handled in a way to minimize risks of unintentional or unauthorized access or use. Risk can be minimized by limiting the collection of data and deleting data once it is no longer needed. In addition, and when applicable, including in certain health related applications, data de-identification can be used to protect a user's privacy. De-identification can be facilitated, when appropriate, by removing specific identifiers (e.g., date of birth, etc.), controlling the amount or specificity of data stored (e.g., collecting location data a city level rather than at an address level), controlling how data is stored (e.g., aggregating data across users), and/or other methods.

The foregoing description, for purpose of explanation, has been described with reference to specific examples. However, the illustrative descriptions above are not intended to be exhaustive or to limit the disclosure to the precise forms disclosed. Many modifications and variations are possible in view of the above teachings. The examples were chosen and described in order to best explain the principles of the disclosure and its practical applications, to thereby enable others skilled in the art to best use the disclosure and various described examples with various modifications as are suited to the particular use contemplated.

Exemplary embodiments of the present disclosure are set out in the following items and articles:

### items

1. A method comprising:
   at an electronic device in communication with a first display, a second display, and an input device:
   obtaining a hand parameter associated with a range of hand movements;
   initiating a first application including a controller user interface;
   generating a user-specific controller user interface based on the hand parameter; and
   displaying, via the first display, the user-specific controller user interface as the controller user interface in the first application, wherein the user-specific controller user interface is generated based on the hand parameter.
2. The method of item 1, wherein the user-specific controller user interface includes one or more virtual buttons on the controller user interface corresponding to the first application.
3. The method of any of items 1-2, wherein obtaining the hand parameter further comprises:
   detecting, at the electronic device, a first input corresponding to a request to open the first application; and
   in response to detecting the first input:
      in accordance with a determination that the first input satisfies one or more criteria including a criterion that is satisfied when a hand enrollment is not completed, displaying a hand parameter user interface associated with the hand enrollment;
      while displaying the hand parameter user interface, detecting, via the input device, one or more second inputs directed towards the hand parameter user interface to obtain the hand parameter associated with the range of hand movements; and
   in accordance with a determination that the first input does not satisfy the one or more criteria:
   forgoing displaying the hand parameter user interface; and
   displaying, via the first display, the user-specific controller user interface corresponding to the first application.
4. The method of any of items 1-3, further comprising:
   while displaying the controller user interface corresponding to the first application, detecting, via the input device, an input corresponding to a request to display a settings user interface of the first application; and
   in response to detecting the input, displaying the settings user interface includes a selectable option to display a hand parameter user interface to obtain the hand parameter.
5. The method of item 4, further comprising:
   after obtaining the hand parameter associated with the range of hand movements, detecting, via the input device, one or more second inputs, including a respective input directed to the selectable option corresponding to a request to regenerate the hand parameter; and
   in response to detecting the one or more second inputs:
      displaying the hand parameter user interface; and
      initiating a process to obtain a second hand parameter associated with the range of hand movements.
6. The method of any of items 1-5, further comprising:
   after obtaining the hand parameter associated with the range of hand movements, detecting, via the input device, a first input corresponding to a request to open a second application, different from the first application; and
   in response to detecting the first input:
      in accordance with a determination that the first input satisfies one or more second criteria, displaying, via the first display, a second controller user interface that is based on a second hand parameter, different from the hand parameter, associated with the range of hand movements; and
      in accordance with a determination that the first input does not satisfy the one or more second criteria, displaying, via the first display, a second hand parameter user interface corresponding to the second application for obtaining the second hand parameter.
7. The method of any of items 1-6, further comprising:
   after obtaining the hand parameter for the first application, detecting, via the input device, a first input corresponding to a request to open a second application, different from the first application; and
   in response to detecting the first input:
      in accordance with a determination that the first input does not satisfy the one or more criteria, displaying, via the first display, the user-specific controller user interface based on the hand parameter.
8. The method of any of items 1-7, wherein obtaining the hand parameter includes:
   in accordance with a determination that a user of the electronic device is a first user, associating the hand parameter with the first user; and
   in accordance with a determination that the user of the electronic device is a second user, different than the first user, associating the hand parameter with the second user.
9. The method of item 8, wherein:
   the determination that the user of the electronic device is the first user is based on a determination that a user account associated with the first application corresponds to a first account of the first user; and
   the determination that the user of the electronic device is the second user is based on a determination that the user account associated with the first application corresponds to a second account of the second user.
10. The method of any of items 1-9, further comprising:
   after obtaining the hand parameter, detecting, via the input device, a first input corresponding to request to open a second application; and
   in response to detecting the first input:
      in accordance with a determination that one or more first criteria are satisfied, including a criterion that is satisfied when the electronic device is associated with a respective object:
      displaying a hand parameter user interface to obtain a second hand parameter associated with the range of hand movements; and
      obtaining, via the input device, the second hand parameter in response to detecting one or more second inputs directed to the hand parameter user interface.
11. The method of any of items 1-9, wherein the hand parameter includes position data of one or more fingers of a hand of a user of the electronic device relative to the first display.
12. The method of any of items 1-11, wherein the hand parameter is based on an orientation of the electronic device while obtaining the hand parameter.
13. The method of any of items 1-12, wherein obtaining the hand parameter includes:
   displaying a hand parameter user interface for obtaining the hand parameter, wherein displaying the hand parameter user interface includes:
   in accordance with a determination that a developer of the first application has provided first data indicating a first respective spatial distribution of a respective plurality of buttons in the controller user interface corresponding to the first application, displaying, via the first display, a plurality of buttons in the hand parameter user interface with a first spatial distribution that is based on the first data; and
   in accordance with a determination that the developer of the first application has provided second data indicating a second respective spatial distribution, different from the first respective spatial distribution, of the respective plurality of buttons in the controller user interface, displaying the plurality of buttons in the hand parameter user interface with a second spatial distribution, different from the first spatial distribution, that is based on the second data.
14. The method of any of items 1-13, wherein displaying the hand parameter user interface includes displaying a second hand parameter user interface on the second display.
15. The method of item 14, wherein displaying the second hand parameter user interface includes displaying one or more prompts for obtaining the hand parameter.
16. The method of any of items 1-15, wherein:
   in accordance with a determination that the hand parameter is a first hand parameter, displaying one or more virtual buttons on the controller user interface includes displaying the one or more virtual buttons at one or more first positions with one or more first sizes; and
   in accordance with a determination that the hand parameter is a second hand parameter, displaying the one or more virtual buttons on the controller user interface includes displaying the one or more virtual buttons at one or more second positions with one or more second sizes, different than the one or more first positions with the one or more first sizes.
17. The method of item 16, wherein:
   the one or more first positions are based on one or more first locations on the first display and that are associated with one or more inputs received while obtaining the first hand parameter; and
   the one or more second positions are based on one or more second locations, different than the one or more first locations, on the first display and that are associated with the one or more inputs received while obtaining the second hand parameter.
18. The method of item 17, wherein:
   displaying the one or more virtual buttons with the one or more first sizes is based on a first accuracy of finger placement relative to the one or more first locations when obtaining the first hand parameter; and
   displaying the one or more virtual buttons with the one or more second sizes is based on a second accuracy of finger placement relative to the one or more second locations when obtaining the second hand parameter.
19. The method of any of items 1-18, further comprising:
   while displaying the controller user interface of the first application, concurrently displaying, on the second display, a game control user interface corresponding to the controller user interface.
20. The method of any of items 1-19, further comprising:
   after obtaining the hand parameter, collecting, over a first time interval, interaction data associated with a sequence of inputs directed toward the user-specific controller user interface detected via the input device; and
   after collecting the interaction data over the first time interval:
      updating the hand parameter to a second hand parameter in accordance with the interaction data; and
      updating one or more of visual properties of the user-specific controller user interface corresponding to the first application based on the second hand parameter.
21. The method of any of items 1-20, further comprising:
   after obtaining the hand parameter associated with the range of hand movements, detecting, via the input device, a first input corresponding to a request to open a second application, different from the first application; and
   in response to detecting the first input:
      displaying, via the second display, a user interface of the second application; and
   displaying, via the first display, a second controller user interface corresponding to the second application, wherein the second controller user interface includes one or more second virtual buttons that are displayed based on the hand parameter.
22. An electronic device comprising:
   one or more processors;
   memory; and
   one or more programs stored in the memory and configured to be executed by the one or more processors, the one or more programs including instructions for performing a method of any of items 1-21.
23. A non-transitory computer readable storage medium storing one or more programs, the one or more programs comprising instructions, which when executed by one or more processors of an electronic device, cause the electronic device to perform a method of any of items 1-21.
24. An electronic device, comprising:
   one or more processors;
   memory; and
   means for performing a method of any of items 1-21.
25. An information processing apparatus for use in an electronic device, the information processing apparatus comprising:
   means for performing a method of any of items 1-21.

### Articles

1. A method comprising:
   at an electronic device in communication with a first display, a second display, and an input device:
   obtaining a hand parameter associated with a range of hand movements;
   initiating a first application including a controller user interface;
   generating a user-specific controller user interface based on the hand parameter; and
   displaying, via the first display, the user-specific controller user interface as the controller user interface in the first application, wherein the user-specific controller user interface is generated based on the hand parameter.
2. The method of article 1, wherein the user-specific controller user interface includes one or more virtual buttons on the controller user interface corresponding to the first application.
3. The method of any of articles 1-2, wherein obtaining the hand parameter further comprises:
   detecting, at the electronic device, a first input corresponding to a request to open the first application; and
   in response to detecting the first input:
      in accordance with a determination that the first input satisfies one or more criteria including a criterion that is satisfied when a hand enrollment is not completed, displaying a hand parameter user interface associated with the hand enrollment;
      while displaying the hand parameter user interface, detecting, via the input device, one or more second inputs directed towards the hand parameter user interface to obtain the hand parameter associated with the range of hand movements; and
   in accordance with a determination that the first input does not satisfy the one or more criteria:
   forgoing displaying the hand parameter user interface; and
   displaying, via the first display, the user-specific controller user interface corresponding to the first application.
4. The method of any of articles 1-3, further comprising:
   after obtaining the hand parameter associated with the range of hand movements, detecting, via the input device, a first input corresponding to a request to open a second application, different from the first application; and
   in response to detecting the first input:
      in accordance with a determination that the first input satisfies one or more second criteria, displaying, via the first display, a second controller user interface that is based on a second hand parameter, different from the hand parameter, associated with the range of hand movements; and
      in accordance with a determination that the first input does not satisfy the one or more second criteria, displaying, via the first display, a second hand parameter user interface corresponding to the second application for obtaining the second hand parameter.
5. The method of any of articles 1-4, further comprising:
   after obtaining the hand parameter for the first application, detecting, via the input device, a first input corresponding to a request to open a second application, different from the first application; and
   in response to detecting the first input:
      in accordance with a determination that the first input does not satisfy the one or more criteria, displaying, via the first display, the user-specific controller user interface based on the hand parameter.
6. The method of any of articles 1-5, wherein obtaining the hand parameter includes:
   in accordance with a determination that a user of the electronic device is a first user, associating the hand parameter with the first user; and
   in accordance with a determination that the user of the electronic device is a second user, different than the first user, associating the hand parameter with the second user.
7. The method of any of articles 1-6, further comprising:
   after obtaining the hand parameter, detecting, via the input device, a first input corresponding to request to open a second application; and
   in response to detecting the first input:
      in accordance with a determination that one or more first criteria are satisfied, including a criterion that is satisfied when the electronic device is associated with a respective object:
      displaying a hand parameter user interface to obtain a second hand parameter associated with the range of hand movements; and
      obtaining, via the input device, the second hand parameter in response to detecting one or more second inputs directed to the hand parameter user interface.
8. The method of any of articles 1-7, wherein the hand parameter includes position data of one or more fingers of a hand of a user of the electronic device relative to the first display.
9. The method of any of articles 1-8, wherein the hand parameter is based on an orientation of the electronic device while obtaining the hand parameter.
10. The method of any of articles 1-9, wherein obtaining the hand parameter includes:
   displaying a hand parameter user interface for obtaining the hand parameter, wherein displaying the hand parameter user interface includes:
   in accordance with a determination that a developer of the first application has provided first data indicating a first respective spatial distribution of a respective plurality of buttons in the controller user interface corresponding to the first application, displaying, via the first display, a plurality of buttons in the hand parameter user interface with a first spatial distribution that is based on the first data; and
   in accordance with a determination that the developer of the first application has provided second data indicating a second respective spatial distribution, different from the first respective spatial distribution, of the respective plurality of buttons in the controller user interface, displaying the plurality of buttons in the hand parameter user interface with a second spatial distribution, different from the first spatial distribution, that is based on the second data.
11. The method of any of articles 1-10, wherein:
   in accordance with a determination that the hand parameter is a first hand parameter, displaying one or more virtual buttons on the controller user interface includes displaying the one or more virtual buttons at one or more first positions with one or more first sizes; and
   in accordance with a determination that the hand parameter is a second hand parameter, displaying the one or more virtual buttons on the controller user interface includes displaying the one or more virtual buttons at one or more second positions with one or more second sizes, different than the one or more first positions with the one or more first sizes.
12. The method of any of articles 1-11, further comprising:
   while displaying the controller user interface of the first application, concurrently displaying, on the second display, a game control user interface corresponding to the controller user interface.
13. The method of any of articles 1-12, further comprising:
   after obtaining the hand parameter, collecting, over a first time interval, interaction data associated with a sequence of inputs directed toward the user-specific controller user interface detected via the input device; and
   after collecting the interaction data over the first time interval:
      updating the hand parameter to a second hand parameter in accordance with the interaction data; and
      updating one or more of visual properties of the user-specific controller user interface corresponding to the first application based on the second hand parameter.
14. The method of any of articles 1-13, further comprising:
   after obtaining the hand parameter associated with the range of hand movements, detecting, via the input device, a first input corresponding to a request to open a second application, different from the first application; and
   in response to detecting the first input:
      displaying, via the second display, a user interface of the second application; and
      displaying, via the first display, a second controller user interface corresponding to the second application, wherein the second controller user interface includes one or more second virtual buttons that are displayed based on the hand parameter.
15. An electronic device in communication with a first display, a second display, and an input device comprising:
   a memory;
   one or more processors; and
   one or more programs stored in the memory and configured to be executed by the one or more processors, the one or more programs including instructions for:
      obtaining a hand parameter associated with a range of hand movements;
      initiating a first application including a controller user interface;
      generating a user-specific controller user interface based on the hand parameter; and
      displaying, via the first display, the user-specific controller user interface as the controller user interface in the first application, wherein the user-specific controller user interface is generated based on the hand parameter.
16. The electronic device of article 15, wherein the user-specific controller user interface includes one or more virtual buttons on the controller user interface corresponding to the first application.
17. The electronic device of any of articles 15-16, wherein obtaining the hand parameter further comprises:
   detecting, at the electronic device, a first input corresponding to a request to open the first application; and
   in response to detecting the first input:
      in accordance with a determination that the first input satisfies one or more criteria including a criterion that is satisfied when a hand enrollment is not completed, displaying a hand parameter user interface associated with the hand enrollment;
      while displaying the hand parameter user interface, detecting, via the input device, one or more second inputs directed towards the hand parameter user interface to obtain the hand parameter associated with the range of hand movements; and
   in accordance with a determination that the first input does not satisfy the one or more criteria:
   forgoing displaying the hand parameter user interface; and
   displaying, via the first display, the user-specific controller user interface corresponding to the first application.
18. A non-transitory computer readable storage medium storing one or more programs, the one or more programs comprising instructions, which when executed by one or more processors of an electronic device in communication with a first display, a second display, and an input device, cause the electronic device to:
   obtain a hand parameter associated with a range of hand movements;
   initiate a first application including a controller user interface;
   generate a user-specific controller user interface based on the hand parameter; and
   display, via the first display, the user-specific controller user interface as the controller user interface in the first application, wherein the user-specific controller user interface is generated based on the hand parameter.
19. The non-transitory computer readable storage medium of article 18, wherein the user-specific controller user interface includes one or more virtual buttons on the controller user interface corresponding to the first application.
20. The non-transitory computer readable storage medium of any of articles 18-19, wherein obtaining the hand parameter further comprises:
   detecting, at the electronic device, a first input corresponding to a request to open the first application; and
   in response to detecting the first input:
      in accordance with a determination that the first input satisfies one or more criteria including a criterion that is satisfied when a hand enrollment is not completed, displaying a hand parameter user interface associated with the hand enrollment;
      while displaying the hand parameter user interface, detecting, via the input device, one or more second inputs directed towards the hand parameter user interface to obtain the hand parameter associated with the range of hand movements; and
   in accordance with a determination that the first input does not satisfy the one or more criteria:
   forgoing displaying the hand parameter user interface; and
   displaying, via the first display, the user-specific controller user interface corresponding to the first application.

## Claims

1. A method comprising:
at an electronic device in communication with a first display, a second display, and an input device:
obtaining a hand parameter associated with a range of hand movements;
initiating a first application including a controller user interface;
generating a user-specific controller user interface based on the hand parameter; and
displaying, via the first display, the user-specific controller user interface as the controller user interface in the first application, wherein the user-specific controller user interface is generated based on the hand parameter.

2. The method of claim 1, wherein the user-specific controller user interface includes one or more virtual buttons on the controller user interface corresponding to the first application.

3. The method of any of claims 1-2, wherein obtaining the hand parameter further comprises:
detecting, at the electronic device, a first input corresponding to a request to open the first application; and
in response to detecting the first input:
in accordance with a determination that the first input satisfies one or more criteria including a criterion that is satisfied when a hand enrollment is not completed, displaying a hand parameter user interface associated with the hand enrollment;
while displaying the hand parameter user interface, detecting, via the input device, one or more second inputs directed towards the hand parameter user interface to obtain the hand parameter associated with the range of hand movements; and
in accordance with a determination that the first input does not satisfy the one or more criteria:
forgoing displaying the hand parameter user interface; and
displaying, via the first display, the user-specific controller user interface corresponding to the first application.

4. The method of any of claims 1-3, further comprising:
while displaying the controller user interface corresponding to the first application, detecting, via the input device, an input corresponding to a request to display a settings user interface of the first application; and
in response to detecting the input, displaying the settings user interface includes a selectable option to display a hand parameter user interface to obtain the hand parameter.

5. The method of any of claims 1-4, further comprising:
after obtaining the hand parameter associated with the range of hand movements, detecting, via the input device, a first input corresponding to a request to open a second application, different from the first application; and
in response to detecting the first input:
in accordance with a determination that the first input satisfies one or more second criteria, displaying, via the first display, a second controller user interface that is based on a second hand parameter, different from the hand parameter, associated with the range of hand movements; and
in accordance with a determination that the first input does not satisfy the one or more second criteria, displaying, via the first display, a second hand parameter user interface corresponding to the second application for obtaining the second hand parameter.

6. The method of any of claims 1-5, further comprising:
after obtaining the hand parameter for the first application, detecting, via the input device, a first input corresponding to a request to open a second application, different from the first application; and
in response to detecting the first input:
in accordance with a determination that the first input does not satisfy the one or more criteria, displaying, via the first display, the user-specific controller user interface based on the hand parameter.

7. The method of any of claims 1-6, wherein obtaining the hand parameter includes:
in accordance with a determination that a user of the electronic device is a first user, associating the hand parameter with the first user; and
in accordance with a determination that the user of the electronic device is a second user, different than the first user, associating the hand parameter with the second user.

8. The method of any of claims 1-7, further comprising:
after obtaining the hand parameter, detecting, via the input device, a first input corresponding to request to open a second application; and
in response to detecting the first input:
in accordance with a determination that one or more first criteria are satisfied, including a criterion that is satisfied when the electronic device is associated with a respective object:
displaying a hand parameter user interface to obtain a second hand parameter associated with the range of hand movements; and
obtaining, via the input device, the second hand parameter in response to detecting one or more second inputs directed to the hand parameter user interface.

9. The method of any of claims 1-8, wherein the hand parameter includes position data of one or more fingers of a hand of a user of the electronic device relative to the first display or the hand parameter is based on an orientation of the electronic device while obtaining the hand parameter.

10. The method of any of claims 1-9, wherein obtaining the hand parameter includes:
displaying a hand parameter user interface for obtaining the hand parameter, wherein displaying the hand parameter user interface includes:
in accordance with a determination that a developer of the first application has provided first data indicating a first respective spatial distribution of a respective plurality of buttons in the controller user interface corresponding to the first application, displaying, via the first display, a plurality of buttons in the hand parameter user interface with a first spatial distribution that is based on the first data; and
in accordance with a determination that the developer of the first application has provided second data indicating a second respective spatial distribution, different from the first respective spatial distribution, of the respective plurality of buttons in the controller user interface, displaying the plurality of buttons in the hand parameter user interface with a second spatial distribution, different from the first spatial distribution, that is based on the second data.

11. The method of any of claims 1-10, wherein:
in accordance with a determination that the hand parameter is a first hand parameter, displaying one or more virtual buttons on the controller user interface includes displaying the one or more virtual buttons at one or more first positions with one or more first sizes; and
in accordance with a determination that the hand parameter is a second hand parameter, displaying the one or more virtual buttons on the controller user interface includes displaying the one or more virtual buttons at one or more second positions with one or more second sizes, different than the one or more first positions with the one or more first sizes.

12. The method of any of claims 1-11, further comprising:
after obtaining the hand parameter, collecting, over a first time interval, interaction data associated with a sequence of inputs directed toward the user-specific controller user interface detected via the input device; and
after collecting the interaction data over the first time interval:
updating the hand parameter to a second hand parameter in accordance with the interaction data; and
updating one or more of visual properties of the user-specific controller user interface corresponding to the first application based on the second hand parameter.

13. The method of any of claims 1-12, further comprising:
after obtaining the hand parameter associated with the range of hand movements, detecting, via the input device, a first input corresponding to a request to open a second application, different from the first application; and
in response to detecting the first input:
displaying, via the second display, a user interface of the second application; and
displaying, via the first display, a second controller user interface corresponding to the second application, wherein the second controller user interface includes one or more second virtual buttons that are displayed based on the hand parameter.

14. An electronic device comprising:
one or more processors;
memory; and
one or more programs stored in the memory and configured to be executed by the one or more processors, the one or more programs including instructions for performing a method of any of claims 1-12.

15. A non-transitory computer readable storage medium storing one or more programs, the one or more programs comprising instructions, which when executed by one or more processors of an electronic device, cause the electronic device to perform a method of any of claims 1-12.
